# EUROPEAN PATENT APPLICATION

(11) **EP 4 613 492 A1**
(43) Date of publication of application: **10.09.2025**
(21) Application number: 25161790.8
(22) Date of filing: 05.03.2025
(51) Int. Cl.: B41J 2/21, B41J 11/46, B41J 19/14, B41J 29/38

(54) **PRINTING APPARATUS AND METHOD OF CONTROLLING PRINTING APPARATUS**

(30) Priority: 08.03.2024 JP 2024035952
(71) Applicant: Seiko Epson Corporation, Tokyo 160-8801 (JP)
(72) Inventor: MATSUMURA, Tetsuya, Suwa-shi, Nagano, 392-8502 (JP)
(74) Representative: MERH-IP Matias Erny Reichl Hoffmann Patentanwälte PartG mbB

(57) **Abstract**

A printing apparatus (1) includes a recording head (30), a control unit (U1), and a detection unit (60). The control unit performs control to form an intermediate image on a medium. The intermediate image includes a mark portion (MAO) detectable by the detection unit and is formed by a given pass among a plurality of passes, based on an input image. The control unit performs control to form, on the medium, a remaining image that is a print image excluding the intermediate image. The remaining image is formed in a pass subsequent to the given pass. The detection unit detects a state of the mark portion. The control unit can execute processing based on the state of the mark portion detected by the detection unit.

## Description

The present application is based on, and claims priority from JP Application Serial Number 2024-035952, filed March 8, 2024, the disclosure of which is hereby incorporated by reference herein in its entirety.

### BACKGROUND

### 1. Technical Field

The present disclosure relates to a printing apparatus that performs main scanning and sub-scanning, and to a method of controlling the printing apparatus.

### 2. Related Art

As a printing apparatus, an inkjet printer that performs main scanning and sub-scanning is known. In order to realize high-precision bidirectional printing, Bi-d adjustment (bidirectional adjustment) for causing landing positions of ink droplets between a forward path and a return path to be matched with each other is necessary. In order to realize high-precision sub-scanning, paper feed adjustment is necessary. With regard to the density of a print image, density adjustment is necessary.

An inkjet printer disclosed in JP-A-2006-264194 forms a test pattern on a recording medium in order to suppress unevenness of a print image caused by variation in the amount of ink ejected from a recording head or by displacement of a landing position. The inkjet printer reads the test pattern by a reading sensor provided on a carriage and creates correction data, thereby performing recording without depending on the nozzle characteristics of each recording head, and the like.

However, in order to form the test pattern, ink and a medium are separately required, and there is also a downtime, namely, a time period during which an image desired by a user cannot be printed.

### SUMMARY

A printing apparatus according to an aspect of the present disclosure is a printing apparatus that forms a print image corresponding to an input image on a medium. The printing apparatus includes a recording head including a nozzle row that can eject a liquid onto the medium, a control unit that controls main scanning in which a relative positional relationship between the recording head and the medium is changed along a main scanning direction, that controls sub-scanning in which a relative positional relationship between the medium and the recording head is changed along a sub-scanning direction intersecting the main scanning direction, that controls ejection of the liquid from the recording head, and that completes recording of the print image through a plurality of passes of the main scanning, and a detection unit that detects a state of the liquid landed on the medium. The control unit performs control to form an intermediate image on the medium. The intermediate image includes a mark portion detectable by the detection unit, and the intermediate image is formed by a given pass among the plurality of passes, based on the input image. The control unit performs control to form, on the medium, a remaining image being the print image excluding the intermediate image, the remaining image being formed in a pass subsequent to the given pass. The detection unit detects a state of the mark portion. The control unit can execute processing based on the state of the mark portion detected by the detection unit.

Further, a method of controlling a printing apparatus according to an aspect of the present disclosure is a method for controlling a printing apparatus that performs main scanning in which a relative positional relationship between a recording head and a medium is changed along a main scanning direction, the recording head including a nozzle row that can eject a liquid onto the medium, that performs sub-scanning in which a relative positional relationship between the medium and the recording head is changed along a sub-scanning direction intersecting the main scanning direction, that ejects the liquid from the recording head, and that completes recording of a print image corresponding to an input image through a plurality of passes of the main scanning. The method includes an intermediate image formation step of forming an intermediate image on the medium, the intermediate image including a mark portion detectable by a detection unit configured to detect a state of the liquid landed on the medium, and the intermediate image being formed by a given pass among the plurality passes, based on the input image, a detection step of detecting a state of the mark portion by the detection unit, a remaining image formation step of forming, on the medium, a remaining image being the print image excluding the intermediate image, the remaining image being formed in a pass subsequent to the given pass, and a processing step of performing processing based on the state of the mark portion detected by the detection unit.

### BRIEF DESCRIPTION OF THE DRAWINGS

FIG. 1 is a diagram schematically illustrating an example of a printing apparatus.
FIG. 2 is a diagram schematically illustrating an example of a recording head and a mark portion.
FIG. 3 is a diagram schematically illustrating an example of forming a print image by repeating main scanning and sub-scanning.
FIG. 4 is a diagram schematically illustrating an example of an arrangement of dots until the print image is formed in an overlapping region.
FIG. 5 is a diagram schematically illustrating an example of the arrangement of dots until the print image is formed in the overlapping region.
FIG. 6 is a diagram schematically illustrating an example of a combination of nozzles used for each raster line in the overlapping region.
FIG. 7 is a flowchart schematically illustrating an example of adjustment processing of the printing apparatus.
FIG. 8 is a diagram schematically illustrating an example of processing based on a state of the mark portion.
FIG. 9 is a diagram schematically illustrating examples of pass division.
FIG. 10 is a diagram schematically illustrating an example of partial overlap printing.
FIG. 11 is a diagram schematically illustrating an example of the arrangement of dots until the print image is formed in the overlapping region.
FIG. 12 is a diagram schematically illustrating an example of the combination of nozzles used for each raster line in the overlapping region.
FIG. 13 is a diagram schematically illustrating an example of the combination of nozzles used for each raster line in the overlapping region in a case where a medium transport amount is not an integer multiple of a nozzle pitch.
FIG. 14 is a diagram schematically illustrating an example of the combination of nozzles in a case where first multi-pass regions and second multi-pass regions are generated.
FIG. 15 is a diagram schematically illustrating an example of the combination of nozzles used for each raster line in the first multi-pass region.

### DESCRIPTION OF EMBODIMENTS

Hereinafter, an embodiment of the present disclosure will be described. Of course, the following embodiment is merely illustrative of the present disclosure, and not all of the characteristics presented in the embodiment are essential to the solution of the disclosure.

### (1) Overview of Aspects Included in Present Disclosure:

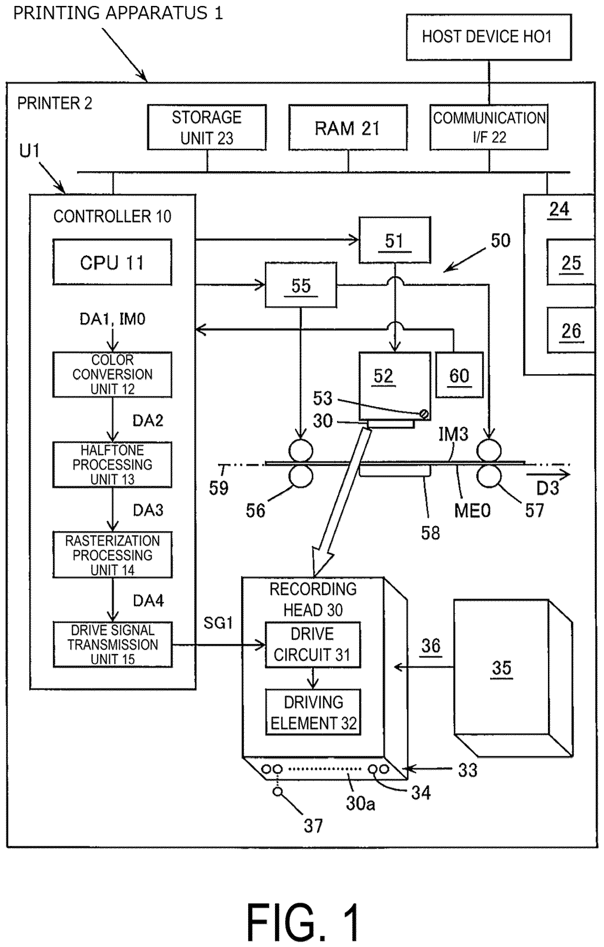

First, an overview of aspects included in the present disclosure will be described with reference to examples illustrated in FIGS. 1 to 15. Note that the drawings in the present application are views schematically illustrating examples, dimensions of each portion in the drawings may be different from actual ones in order to make the size of each of the portions recognizable, magnifications in each direction indicated in the drawings may be different from one another, and the drawings may be inconsistent with one another. Of course, each element of the aspect is not limited to a specific example denoted by a reference sign. In "Overview of Aspects Included in Present Disclosure", a parenthesized word indicates a supplementary description of an immediately preceding word.

### First Aspect

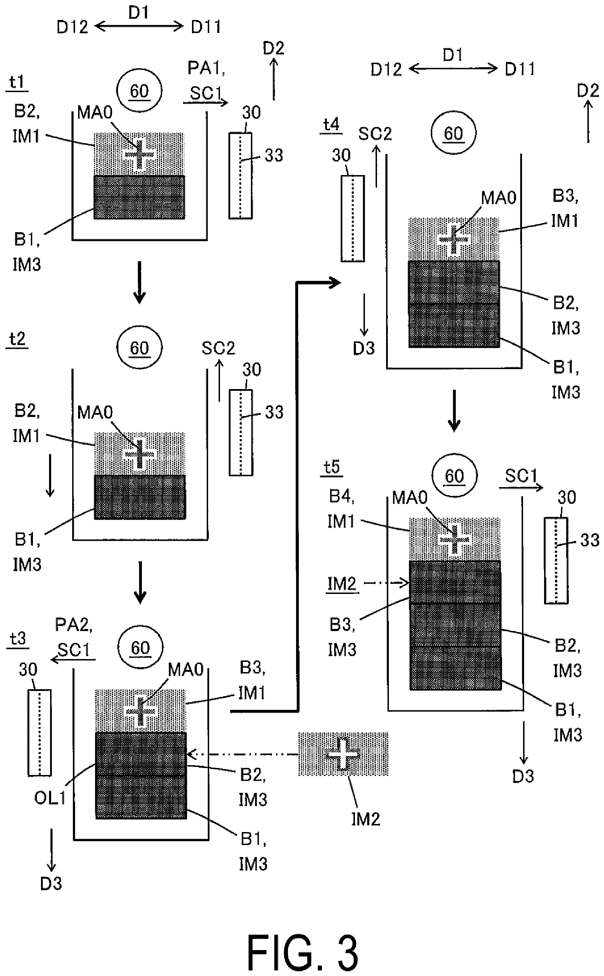

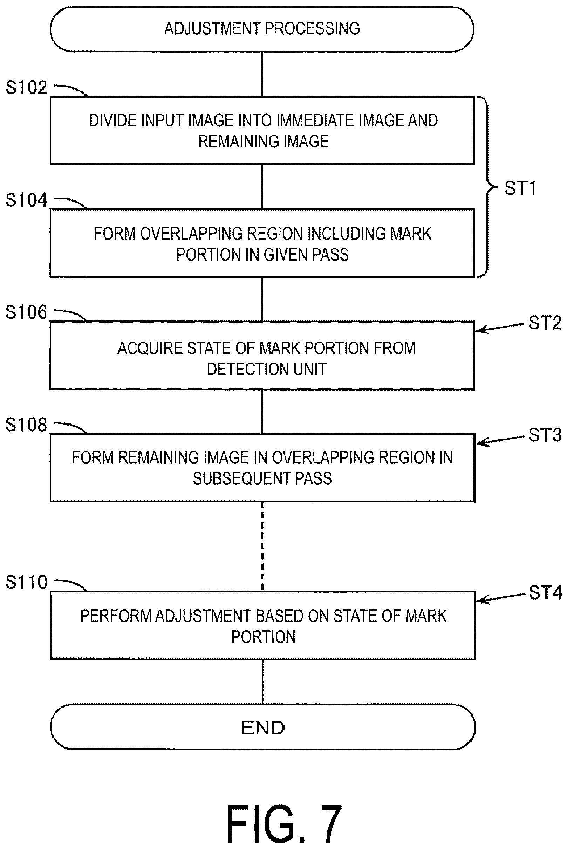

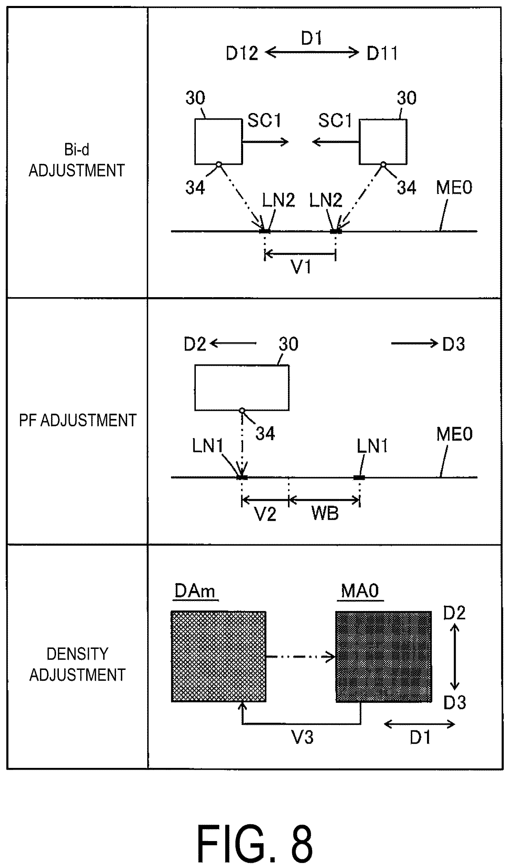

As illustrated in FIGS. 1 and 3, a printing apparatus 1 according to an aspect is the printing apparatus 1 that forms a print image IM3 corresponding to an input image IM0 on a medium ME0, and includes a control unit U1 and a detection unit 60. A recording head 30 includes a nozzle row 33 that can eject a liquid 36 onto the medium ME0. The control unit U1 controls main scanning SC1 in which a relative positional relationship between the recording head 30 and the medium ME0 is changed along a main scanning direction D1, and controls sub-scanning SC2 in which a relative positional relationship between the medium ME0 and the recording head 30 is changed along a sub-scanning direction D2 intersecting the main scanning direction D1. Further, the control unit controls ejection of the liquid 36 from the recording head 30, and completes recording of the print image IM3 through a plurality of passes of the main scanning SC1. The detection unit 60 detects a state of the liquid 36 landed on the medium ME0. The control unit U1 performs control to form an intermediate image IM1 on the medium ME0. The intermediate image IM1 includes a mark portion MA0 detectable by the detection unit 60, and is formed in a given pass (e.g., a first pass PA1) among the plurality of passes, based on the input image IM0. The control unit U1 performs control to form, on the medium ME0, a remaining image IM2 that is the print image IM3 excluding the intermediate image IM1. The remaining image IM2 is formed in a path (e.g., a second path PA2) subsequent to the given pass (PA1). The detection unit 60 detects a state of the mark portion MA0. As illustrated in FIGS. 7 and 8, the control unit U1 can execute processing based on the state of the mark portion MA0 detected by the detection unit 60.

In the given pass (PA1) among the plurality of passes, the intermediate image IM1 including the mark portion MA0 detectable by the detection unit 60 is formed on the medium ME0, based on the input image IM0. The state of the mark portion MA0 is detected by the detection unit 60. The remaining image IM2 that is the print image excluding the intermediate image IM1 is formed on the medium ME0 in the pass (PA2) subsequent to the given pass (PA1). Although the mark portion MA0 is buried in the print image IM3, it is possible to execute the processing based on the state of the mark portion MA0 detected by the detection unit 60.

As described above, it is not necessary to separately print a test pattern for adjustment of the printing apparatus 1. Therefore, the above-described aspect can provide a printing apparatus capable of reducing the consumption amount of a liquid, the consumption amount of a medium, and a printing time for printing a test pattern.

Here, the medium includes various objects such as paper, fabric, and film.

The state of the mark portion to be detected includes the position of the mark portion, the density of the mark portion, and the like.

The above-described change in the relative positional relationship means a movement of at least one of the recording head and the medium. Therefore, during the main scanning, the control unit may move the recording head along the main scanning direction without moving the medium, may move the medium along the main scanning direction without moving the recording head, or may move both the recording head and the medium along the main scanning direction. During the sub-scanning, the control unit may move the medium along the sub-scanning direction without moving the recording head, may move the recording head along the sub-scanning direction without moving the medium, or may move both the recording head and the medium along the sub-scanning direction.

The processing based on the state of the mark portion includes Bi-d adjustment (bidirectional adjustment) for causing a landing position in a forward path to be matched with a landing position in a return path, paper feed adjustment (adjustment of a medium transport amount), density adjustment, and the like.

A method of recording the print image is not particularly limited as long as the print image includes a portion for which the recording is completed through a plurality of passes, and the method may be a method of performing recording in both the forward path and the return path of the main scanning, or a method of performing recording in only one of the forward path and the return path of the main scanning. The recording of the print image including the portion for which recording is completed through the plurality of passes may be multi-pass recording in which the entire print image is formed in two or more passes, or may be recording in which the print image includes a portion for which recording is completed in a single pass such as band printing in which recording regions partially overlap each other. In the multi-pass recording of the print image, the number of passes may partially change. The relative movement amount of the recording head in the sub-scanning direction during the sub-scanning may be the same every time, or may be changed during a plurality of passes of the sub-scanning.

Note that the above-described additional remarks also apply to the following aspects.

### Second Aspect

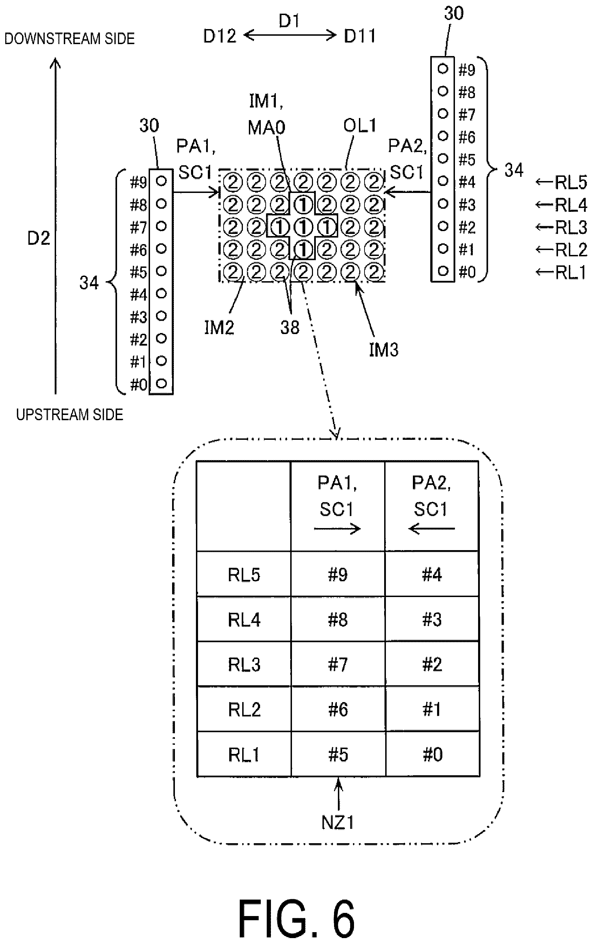

As illustrated in FIGS. 3 and 6 and the like, the plurality of passes may include a first pass PA1 and a second pass PA2. The control unit U1 may control formation of the print image IM3 to cause an overlapping region OL1 to be generated between an image recording region (e.g., band regions B1 and B2) in the first pass PA1 and an image recording region (e.g., band regions B2 and B3) in the second pass PA2. The control unit U1 may perform control to form the mark portion MA0 in the overlapping region OL1 in one of the passes.

In the above-described case, since the mark portion MA0 is formed in one pass, it is possible to reduce errors generated in the mark portion as compared to a case where the mark portion is formed in two or more passes.

Note that the "first", "second", or the like in the present application are terms for identifying each constituent element included in a plurality of constituent elements having similarity, and do not mean an order. This additional remark also applies to the following aspects.

### Third Aspect

Here, it is assumed that the sub-scanning direction D2 is a relative movement direction of the recording head 30 with respect to the medium ME0. As illustrated in FIG. 6 and the like, the control unit U1 may perform control to form the mark portion MA0 in the overlapping region OL1 by ejecting the liquid 36 from a downstream nozzle NZ1 arranged on the most downstream side in the sub-scanning direction D2, among a combination of a plurality of nozzles 34 that eject the liquid 36 onto a raster line (e.g., raster lines RL1 to RL5) along the main scanning direction D1 in the overlapping region OL1.

Since the ejection of the liquid 36 to each raster line in the overlapping region OL1 is performed first from the downstream nozzle NZ1, the mark portion MA0 is formed by the liquid 36 ejected from the downstream nozzle NZ1 to the overlapping region OL1. Thus, the state of the mark portion MA0, which is not affected by the liquid 36 ejected from another nozzle to the overlapping region OL1, is detected by the detection unit 60. Therefore, in the above-described aspect, it is possible to accurately detect the mark portion.

### Fourth Aspect

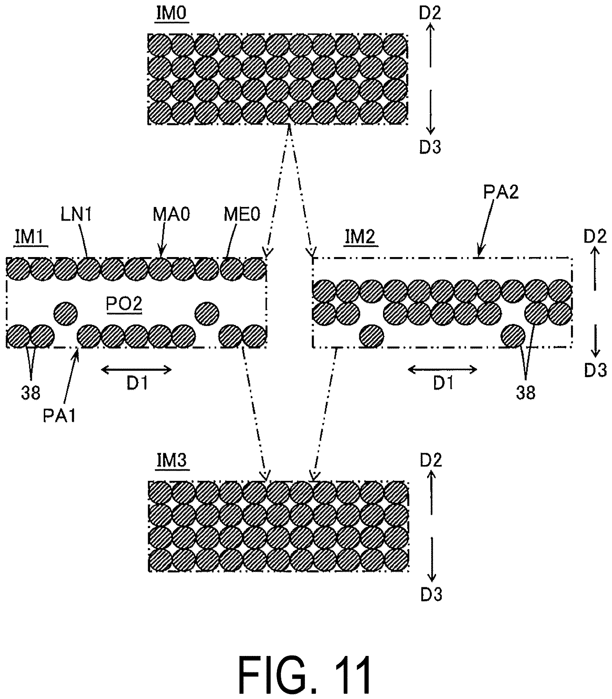

As illustrated in FIGS. 11 to 13, the control unit U1 may perform control to form the mark portion MA0 in the overlapping region OL1 by ejecting the liquid 36 from a nozzle (e.g., a most downstream nozzle NZ2) arranged on the most downstream side in the sub-scanning direction D2 among the plurality of nozzles 34 that eject the liquid 36 onto the overlapping region OL1.

Since the liquid 36 is first ejected from the nozzle on the most downstream side (NZ2) onto the overlapping region OL1, the state of the mark portion MA0, which is not affected by the liquid 36 ejected from the nozzle onto the overlapping region OL1, is detected by the detection unit 60. Further, since the nozzle (NZ2) is arranged on the most downstream side in the nozzle row 33, before the mark portion MA0 is formed, a dot 38 is not formed on the downstream side in the sub-scanning direction D2, and thus the state of the mark portion MA0 is accurately detected. Note that even if the overlapping region OL1 is narrow, it is possible to cause overlap of one nozzle only at the end of the nozzle row 33, as a measure against a transport error. If the nozzle (NZ2) on the most downstream side is set as a nozzle for forming the mark portion, the mark portion MA0 is formed no matter what kind of recording is performed. Therefore, processing and a memory area for determining the nozzle for forming the mark portion become unnecessary. Therefore, the above-described aspect can provide a preferable example that accurately detects the mark portion.

### Fifth Aspect

As illustrated in FIG. 6 and the like, the plurality of passes may include a first pass PA1 and a second pass PA2 in which a movement direction of the recording head 30 is opposite to that in the first pass PA1. The control unit U1 may perform control to form the intermediate image IM1 on the medium ME0 in the first pass PA1. The control unit U1 may perform control to form a portion of the remaining image IM2 on the medium ME0 in the second pass. The portion of the remaining image IM2 is at least on the same raster line (RL2 to RL4) as the mark portion MA0, and the raster line (e.g., RL2 to RL4) extends along the main scanning direction D1.

When all the raster lines passing through the mark portion MA0 are recorded by the main scanning SC1 of the same direction, the characteristics of the raster lines are likely to appear, and the raster lines are likely to become noticeable in the entire print image IM3. In the above-described aspect, after the mark portion MA0 is formed on the raster lines, recording is performed by the main scanning SC1 in the opposite direction to the direction applied when forming the mark portion MA0. Thus, the characteristics of the raster lines are unlikely to appear, and it is thus possible to suppress a trace of the mark portion from remaining when the print image is completed.

### Sixth Aspect

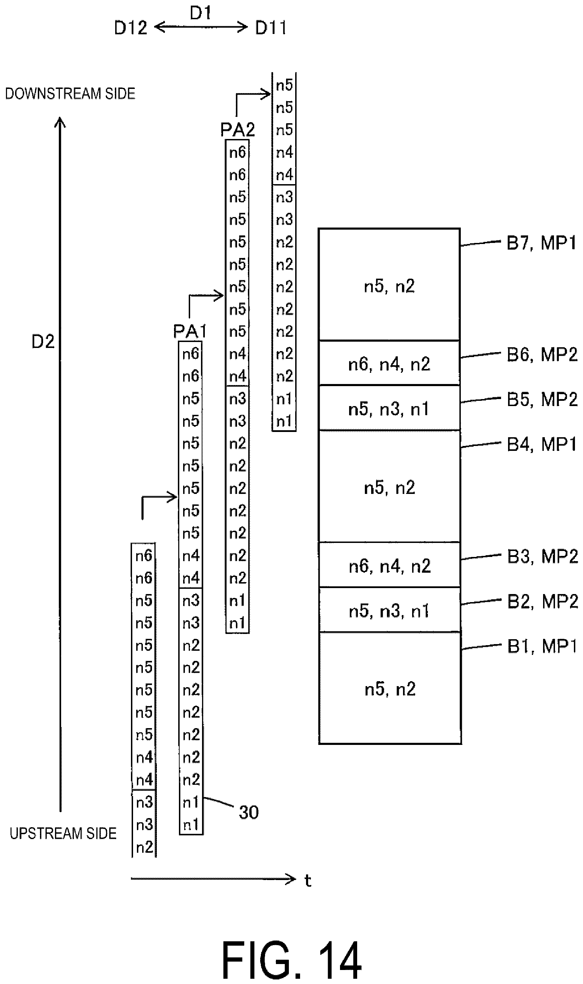

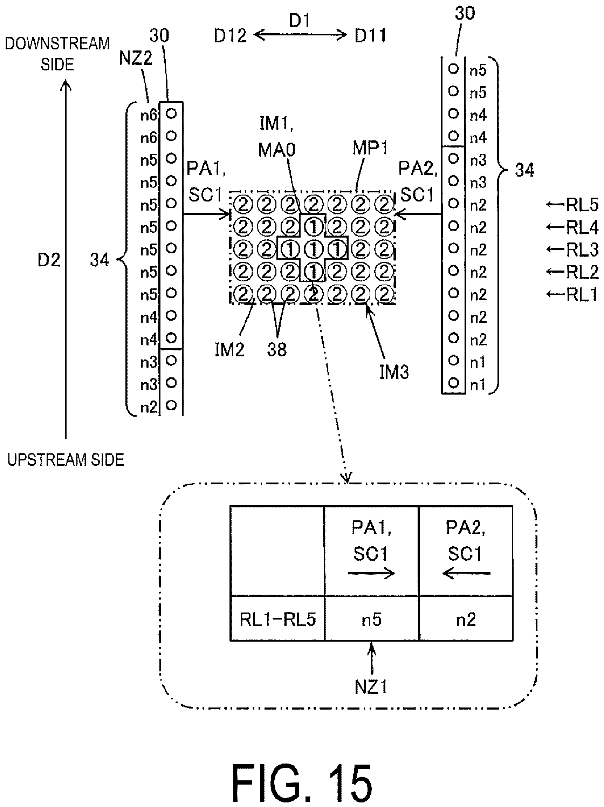

As illustrated in FIGS. 14 and 15, the control unit U1 may complete the recording to cause a first multi-pass region MP1 and a second multi-pass region MP2 to be present in the sub-scanning direction D2. The first multi-pass region MP1 is a region in which the recording is completed in a predetermined number of passes equal to or greater than two, and the second multi-pass region MP2 is a region in which the recording is completed in a number of passes greater than the predetermined number of passes. The control unit U1 may perform control to form the mark portion MA0 in the first multi-path region MP1.

Since the mark portion MA0 is formed in a small number of passes, when the mark portion MA0 is formed in a region formed in a large number of passes, the mark portion MA0 may become noticeable in the print image IM3 due to a relatively large difference in the recording characteristics between the mark portion MA0 and the periphery thereof. In the above-described aspect, since the mark portion MA0 is formed in a region formed in a relatively small number of passes, the mark portion can be made less noticeable in the print image.

### Seventh Aspect

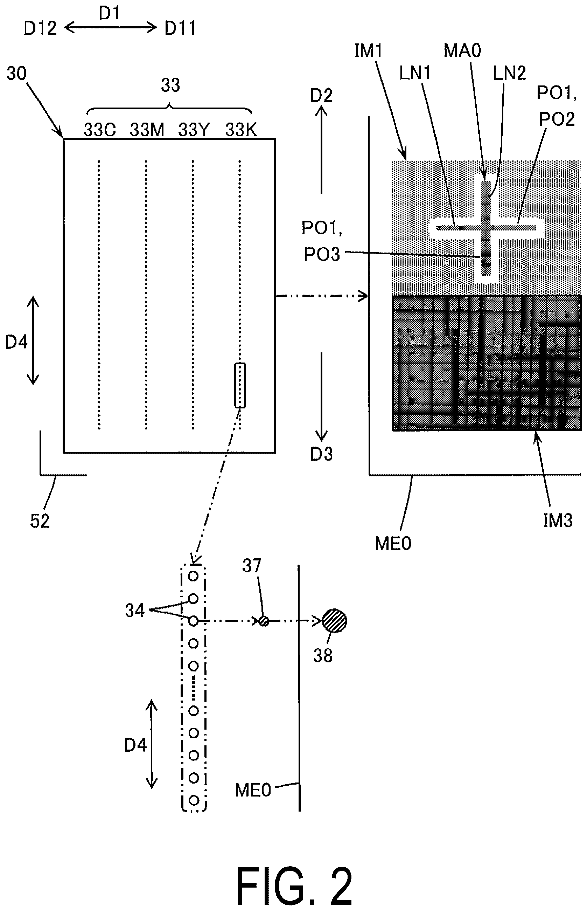

As illustrated in FIGS. 2 to 5 and the like, when the mark portion MA0 is formed in the given pass (PA1), the control unit U1 may not cause the recording head 30 to eject the liquid 36 onto a landing position PO1 that is adjacent to the mark portion MA0 on the medium ME0.

In the above-described case, since the dot 38 is not formed at the position that is adjacent to the mark portion MA0 in the intermediate image IM1, the accuracy of detecting the state of the mark portion can be improved.

Note that, although not included in the above-described seventh aspect, even if the dot 38 is formed at the position that is adjacent to the mark portion MA0 in the intermediate image IM1, the detection unit 60 can detect the state of the mark portion MA0 as long as the mark portion MA0 is formed such that the state of the mark portion MA0 can be detected by the detection unit 60. For example, due to a difference in the arrangement of the dot 38 between the mark portion MA0 and the position that is adjacent to the mark portion MA0, the detection unit 60 can detect the state of the mark portion MA0.

### Eighth Aspect

As illustrated in FIGS. 2 to 5 and the like, the mark portion MA0 is an intersecting pattern formed by a pattern of the liquid 36 landed on the medium ME0 in which a main scanning line LN1 along the main scanning direction D1 and a sub-scanning line LN2 along the sub-scanning direction intersect each other. On the intermediate image IM1, the main scanning line LN1 may have a higher density of the dots 38 of the liquid 36 than that of a landing position PO2 that is adjacent to the main scanning line LN1 in the sub-scanning direction D2. On the intermediate image IM1, the sub-scanning line LN2 may have a higher density of the dots 38 of the liquid 36 than that of a landing position PO3 that is adjacent to the sub-scanning line LN2 in the main scanning direction D1.

In the above-described case, it is possible to provide a preferable example for both bidirectional adjustment and medium transport amount adjustment.

Here, the main scanning line is not limited to a pattern in which dots are coupled to each other along the main scanning direction, and may be a pattern in which dots are discretely arranged along the main scanning direction in a manner that can be described as a dotted line. The sub-scanning line is not limited to a pattern in which dots are coupled to each other along the sub-scanning direction, and may be a pattern in which dots are discretely arranged along the sub-scanning direction in a manner that can be described as a dotted line. These additional remarks also apply to the following aspects.

### Ninth Aspect

A method of controlling the printing apparatus 1 according to an aspect is a printing method including performing the main scanning SC1 in which a relative positional relationship between the recording head 30 and the medium ME0 is changed along the main scanning direction D1, the recording head 30 including the nozzle row 33 capable of ejecting the liquid 36 onto the medium ME0, and the sub-scanning SC2 in which a relative positional relationship between the medium ME0 and the recording head 30 is changed along the sub-scanning direction D2 intersecting the main scanning direction D1, ejecting the liquid 36 from the recording head 30, and completing recording of the print image IM3 corresponding to the input image IM0 through a plurality of passes of the main scanning SC1. As illustrated in FIG. 7, this control method includes the following steps.
(a1) An intermediate image formation step ST1 of forming the intermediate image IM1 on the medium ME0, the intermediate image IM1 including the mark portion MA0 detectable by the detection unit 60 that detects the state of the liquid 36 landed on the medium ME0, and the intermediate image IM1 being formed in a given pass (PA1) among the plurality of passes, based on the input image IM0.
(a2) A detection step ST2 of detecting the state of the mark portion MA0 by the detection unit 60.
(a3) A remaining image formation step ST3 of forming, on the medium ME0, the remaining image IM2 that is the print image IM3 excluding the intermediate image IM1, the remaining image IM2 being formed in a pass (PA2) subsequent to the given pass (PA1).
(a4) A processing step ST4 of performing processing based on the state of the mark portion MA0 detected by the detection unit 60.

The above-described aspect can provide a control method capable of reducing the consumption amount of a liquid, the consumption amount of a medium, and a printing time for printing a test pattern.

Further, the above-described aspect can be applied to a printing system including the above-described printing apparatus, a control method for the printing system, a control program for the above-described printing apparatus, a control program for the printing system, a computer-readable recording medium on which one of the control programs is recorded, and the like. Further, the above-described printing apparatus may be constituted by a plurality of distributed components.

### (2) Specific Example of Printing Apparatus

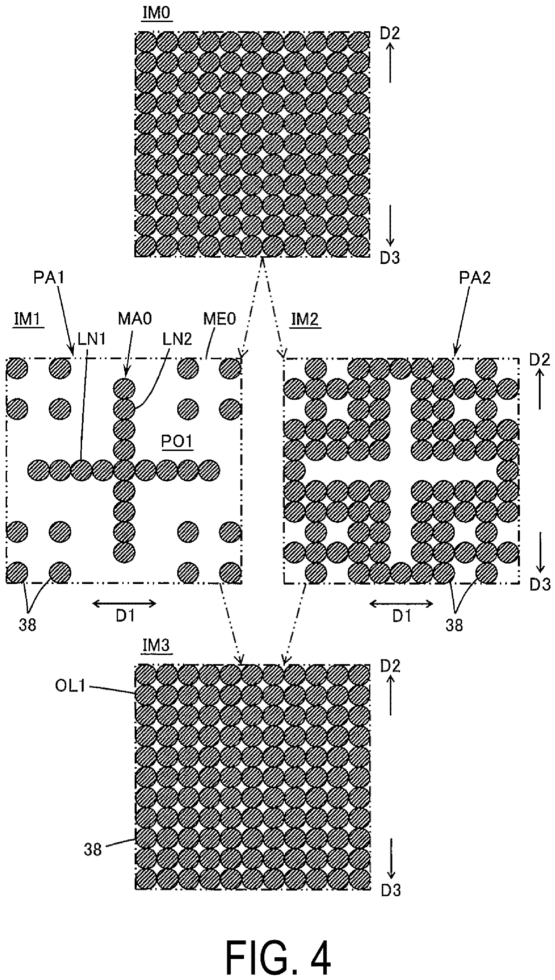

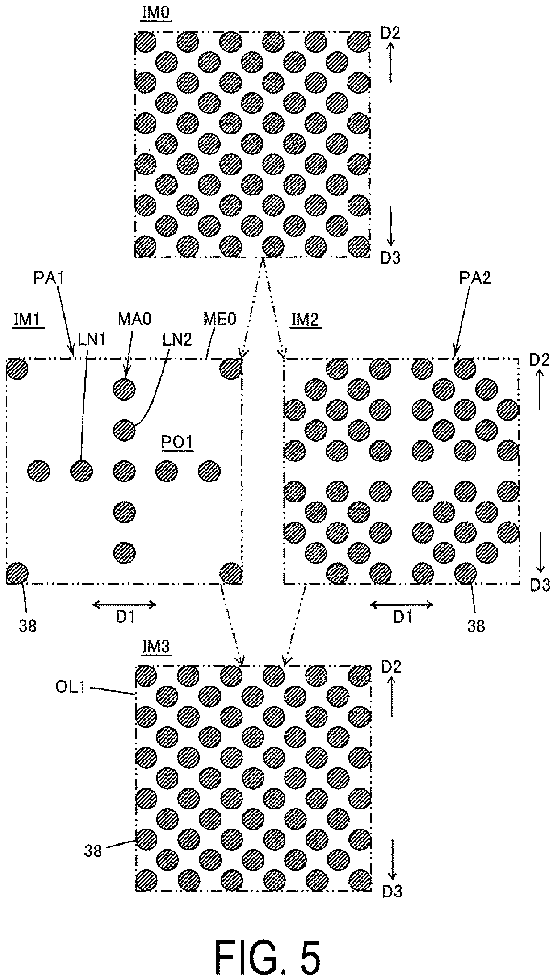

FIG. 1 schematically illustrates the printing apparatus 1. Although the printing apparatus 1 in this specific example is a printer 2 itself, the printing apparatus 1 may be a combination of the printer 2 and a host device HO1. The printer 2 may include additional elements that are not illustrated in FIG. 1. FIG. 2 schematically illustrates the nozzle row 33 of the recording head 30 and the mark portion MA0 on the medium ME0. FIG. 3 schematically illustrates how the print image IM3 is formed by repeating the main scanning SC1 and the sub-scanning SC2. The printer 2 of this specific example is a serial printer that repeats the main scanning SC1 and the sub-scanning SC2 so that an overlapping region is generated between passes. FIGS. 4 and 5 each schematically illustrate an arrangement of dots until the print image IM3 is formed in the overlapping region OL1 between passes. FIG. 6 schematically illustrates a combination of the nozzles 34 used for each raster line of the overlapping region OL1.

The printer 2 illustrated in FIG. 1 is an inkjet printer that ejects the liquid 36 as a droplet 37. The printer 2 illustrated in FIG. 1 includes a controller 10, a random access memory (RAM) 21, which is a semiconductor memory, a communication I/F 22, a storage unit 23, an operation panel 24, the recording head 30, a drive unit 50, the detection unit 60, and the like. The controller 10 and the drive unit 50 are an example of the control unit U1. The controller 10, the RAM 21, the communication I/F 22, the storage unit 23, and the operation panel 24 are coupled to a bus and are configured to be able to input and output information to and from one another.

The controller 10 includes a central processing unit (CPU) 11, which is a processor, a color conversion unit 12, a halftone processing unit 13, a rasterization processing unit 14, a drive signal transmission unit 15, and the like. The controller 10 controls the main scanning SC1 and the sub-scanning SC2 by the drive unit 50, and the ejection of the droplet 37 by the recording head 30 based on original image data DA1 acquired from any one of the host device HO1, a memory card (not illustrated), and the like. It can be said that the controller 10 controls the drive unit 50 and the recording head 30 so that the print image IM3, corresponding to the original image data DA1 that serves as the input image IM0, is formed on the medium ME0. For example, RGB data having an integer value of 2⁸ gradations or 2¹⁶ gradations of red (R), green (G), and blue (B) for each pixel can be applied to the original image data DA1.

The controller 10 can be constituted by a system on a chip (SoC), or the like.

The CPU 11 is a device that mainly performs information processing and control in the printer 2.

With reference to, for example, a color conversion look-up table (LUT) that defines a correspondence relationship between R, G, and B gradation values and C, M, Y, and K gradation values, the color conversion unit 12 converts RGB data into ink amount data DA2 having an integer value of 2⁸ gradations or 2¹⁶ gradations of C, M, Y, and K for each pixel. The ink amount data DA2 represents usage amounts of the liquids 36 of C, M, Y, and K in units of each of pixels. Further, when the resolution of the RGB data is different from the printing resolution, the color conversion unit 12 first converts the resolution of the RGB data to the printing resolution, or converts the resolution of the ink amount data DA2 to the printing resolution.

The halftone processing unit 13 generates dot data DA3 by reducing the number of gradations of the gradation value by performing halftone processing using any one of a dither method, an error diffusion method, and the like on the gradation value of each pixel constituting the ink amount data DA2. The dot data DA3 represents a formation state of the dot 38 of the droplet 37 in units of each of pixels. The dot data DA3 may be binary data indicating whether or not a dot is formed, or may be multiple-value data of three or more gradations that can correspond to dots with different sizes such as small, medium, and large dots.

The rasterization processing unit 14 generates raster data DA4 by performing rasterization processing of rearranging the dot data DA3 in an order in which the dots 38 are formed by the drive unit 50.

The drive signal transmission unit 15 generates a drive signal SG1 from the raster data DA4 and outputs the drive signal SG1 to a drive circuit 31 of the recording head 30. The drive signal SG1 corresponds to a voltage signal applied to a drive element 32 of the recording head 30. For example, when the dot data DA3 is "dot formation", the drive signal transmission unit 15 outputs the drive signal SG1 for ejecting a droplet for dot formation. When the dot data DA3 is data of three or more values, the drive signal transmission unit 15 outputs the drive signal SG1 for ejecting a droplet for a large dot when the dot data DA3 is "large dot formation", and outputs the drive signal SG1 for ejecting a droplet for a small dot when the dot data DA3 is "small dot formation". The print image IM3 is formed on the medium ME0 in accordance with the drive signal SG1. Therefore, the ink amount data DA2, the dot data DA3, or the raster data DA4 may be applied to the input image IM0.

Each of the above-described units 11 to 15 may be constituted by an application specific integrated circuit (ASIC), and may directly read data that is a processing target from the RAM 21 or directly write processed data to the RAM 21.

The drive unit 50 controlled by the controller 10 includes a carriage drive unit 51 including a servo motor, and a roller drive unit 55 including a servo motor. The drive unit 50 causes a carriage 52 to reciprocate along the main scanning direction D1 according to driving of the carriage drive unit 51, and feeds the medium ME0 in a feed direction D3 along a transport path 59 according to driving of the roller drive unit 55. As illustrated in FIG. 2, the main scanning direction D1 is a direction intersecting an arrangement direction D4 of the nozzles 34 in the nozzle row 33, and is, for example, a direction orthogonal to the arrangement direction D4. In FIG. 2, the right direction is a forward direction D11 of the main scanning SC1, and the left direction is a return direction D12 of the main scanning SC1. The feed direction D3 is a direction intersecting the main scanning direction D1, and is, for example, a direction orthogonal to the main scanning direction D1. In FIG. 1, the feed direction D3 is the right direction. The sub-scanning direction D2 illustrated in FIG. 2 is a direction opposite to the feed direction D3. It can be said that the carriage drive unit 51 performs the main scanning SC1 in which the relative positional relationship between the recording head 30 and the medium ME0 is changed along the main scanning direction D1. The roller drive unit 55 includes a transport roller pair 56 and a discharge roller pair 57. Under the control by the controller 10, the roller drive unit 55 performs the sub-scanning SC2 for feeding the medium ME0 in the feed direction D3 by rotating a driving transport roller of the transport roller pair 56 and a driving discharge roller of the discharge roller pair 57. It can be said that the roller drive unit 55 performs the sub-scanning SC2 in which the relative positional relationship between the medium ME0 and the recording head 30 is changed along the sub-scanning direction D2 intersecting the main scanning direction D1. Although the carriage 52 illustrated in FIG. 2 does not move in the sub-scanning direction D2, the drive unit 50 may realize the sub-scanning SC2 by moving the carriage 52 in the sub-scanning direction D2. At this time, the medium ME0 may not move in the sub-scanning direction D2, and the drive unit 50 may realize the sub-scanning SC2 by moving both the carriage 52 and the medium ME0 in the sub-scanning direction D2. As illustrated in FIG. 3, the control unit U1 completes the recording of the print image IM3 through a plurality of passes of the main scanning SC1.

The medium ME0 is a printed matter that holds a print image. The material of the medium ME0 is not particularly limited, and various materials such as paper, resin, and metal can be considered. The shape of the medium ME0 is also not particularly limited, and various shapes such as a rectangle and a roll shape can be considered, and a three-dimensional shape may also be used.

A platen 58 is provided below the transport path 59 and supports the medium ME0 by coming into contact with the medium ME0 on the transport path 59. The carriage 52 is mounted with the recording head 30. A liquid cartridge 35 that supplies the recording head 30 with the liquid 36 to be ejected as the droplet 37 may be mounted on the carriage 52. Of course, the liquid 36 may be supplied from the liquid cartridge 35 installed outside the carriage 52 to the recording head 30 via a tube. The carriage 52 is fixed to an endless belt (not illustrated) and is movable in the main scanning direction D1 along a guide 53 having an elongated shape and whose longitudinal direction is in parallel with the main scanning direction D1. The recording head 30 controlled by the controller 10 includes the drive circuit 31, the drive element 32, and the like, and attaches the liquid 36 to the medium ME0 by ejecting the droplet 37 toward the medium ME0 supported by the platen 58. Therefore, it can be said that the control unit U1 controls the ejection of the droplet 37 from the recording head 30.

The drive circuit 31 applies a voltage signal to the drive element 32 in accordance with the drive signal SG1 input from the drive signal transmission unit 15. The drive element 32 may be a piezoelectric element that applies pressure to the liquid 36 inside a pressure chamber communicating with the nozzle 34, may be a drive element that ejects the droplet 37 from the nozzle 34 by generating an air bubble inside the pressure chamber with heat, or the like. The pressure chamber of the recording head 30 is supplied with the liquid 36 from the liquid cartridge 35. The liquid 36 in the pressure chamber is ejected as the droplet 37 toward the medium ME0 from the nozzle 34 by the drive element 32. In this way, the dot 38 of the droplet 37 is formed on the medium ME0, the print image IM3 expressed by a pattern of the dots 38 is formed on the medium ME0. While the recording head 30 moves in the main scanning direction D1, the dot 38 according to the raster data DA4 is formed, and the medium ME0 is repeatedly fed in the feed direction D3 by one sub-scan so that the print image IM3 is formed on the medium ME0. Note that the printer 2 may perform bi-directional printing in which the print image IM3 is formed by both the main scanning in the forward direction D11 and the main scanning in the return direction D12, or may perform uni-directional printing in which the print image IM3 is formed by only one of the main scanning in the forward direction D11 and the main scanning in the return direction D12.

The RAM 21 stores the original image data DA1 and the like received from the host device HO1, a memory (not illustrated), or the like. The communication I/F 22 is coupled to the host device HO1 by wire or wirelessly, and inputs and outputs information to and from the host device HO1. The host device HO1 includes a computer such as a personal computer or a tablet terminal, a mobile phone such as a smartphone, a digital camera, a digital video camera, or the like. The storage unit 23 may be a nonvolatile semiconductor memory such as a flash memory, a magnetic storage device such as a hard disk, or the like. The operation panel 24 includes an output unit 25 such as a liquid crystal panel that displays information, and an input unit 26 such as a touchscreen that receives an operation onto a display screen, and the like.

The detection unit 60 detects the state of the liquid 36 landed on the medium ME0. In particular, the detection unit 60 detects the state of the mark portion MA0 included in the intermediate image IM1. The detection unit 60 illustrated in FIGS. 1 and 3 is provided separately from the carriage 52 in the printer 2 so as not to move in the main scanning direction D1, and detects the density of a location at which the mark portion MA0 is formed on the medium ME0 in units of each of detection elements, such as an imaging element. Note that the detection unit 60 may be mounted on the carriage 52.

The detection unit 60 may be a solid-state imaging element such as a line sensor or an area sensor constituted by charge coupled devices (CCD) as in a so-called digital camera, or may be a complementary metal-oxide semiconductor (CMOS) image sensor, a contact image sensor (CIS), a CCD image sensor, or the like. An external digital camera or the like that serves as the detection unit 60 may be coupled to the printer 2. The detection unit 60 of this specific example is capable of detecting the density of the pattern of the dots 38 formed on the medium ME0 in units of each of detection elements, and outputs, to the controller 10, a digital value indicating the density in units of each of detection elements. The detection unit 60 can detect the state of the mark portion MA0 such as the position and the density thereof in units of each of the dots 38. Therefore, even when the dots 38 included in the mark portion MA0 are discretely arranged, the detection unit 60 can detect the state of the mark portion MA0.

The recording head 30 illustrated in FIG. 2 includes, at a nozzle surface 30a, the nozzle row 33 in which the plurality of nozzles 34 capable of ejecting the droplet 37 onto the medium ME0 are arranged at an interval of a predetermined nozzle pitch in the arrangement direction D4. Here, the nozzle means a small hole through which a droplet is jetted, and the nozzle row means an arrangement of a plurality of the nozzles. The nozzle surface 30a is an ejection surface of the droplet 37. Of course, the dot 38 of C is formed from the droplet 37 of C on the medium ME0, the dot 38 of M is formed from the droplet 37 of M on the medium ME0, the dot 38 of Y is formed from the droplet 37 of Y on the medium ME0, and the dot 38 of K is formed from the droplet 37 of K on the medium ME0. The nozzle row 33 includes, for example, a C nozzle row 33C capable of ejecting the liquid 36 of C onto the medium ME0, an M nozzle row 33M capable of ejecting the liquid 36 of M onto the medium ME0, a Y nozzle row 33Y capable of ejecting the liquid 36 of Y onto the medium ME0, and a K nozzle row 33K capable of ejecting the liquid 36 of K onto the medium ME0. In each of the nozzle rows (33C, 33M, 33Y, and 33K) illustrated in FIG. 2, the plurality of nozzles 34 are arranged in one row at the interval of the predetermined nozzle pitch in the arrangement direction D4. The plurality of nozzles 34 of each of the nozzle rows (33C, 33M, 33Y, and 33K) may be arranged in a staggered pattern, that is, in two rows at the interval of the predetermined nozzle pitch in the arrangement direction D4. Here, the arrangement direction of the plurality of nozzles 34 arranged in the staggered manner is the arrangement direction of the nozzles that is determined focusing on each of the two rows.

As illustrated in FIG. 3, the printer 2 of this specific example forms the intermediate image IM1 on the medium ME0 based on the input image IM0 by a given pass among the plurality of passes for the overlapping region OL1, and forms the remaining image IM2 on the medium ME0 in a pass subsequent to the given pass. The print image IM3 to be formed is not a test pattern for adjustment such as Bi-d adjustment, paper feed adjustment, and density adjustment, but is an image to be printed in order to obtain a printed matter desired by a user for the user to use for various purposes. For example, the print image IM3 includes a natural image or a photographic image to be displayed in a room or sold by the user, a document image to be shown to other people such as a line drawing for presentation, and the like. The intermediate image IM1 is formed from the input image IM0 exemplified by these images described above. The printer 2 includes the mark portion MA0 detectable by the detection unit 60 in the intermediate image IM1, and after forming the intermediate image IM1, fills a peripheral region of the mark portion MA0 with the remaining image IM2, thereby obtaining the printed matter, which is the print image IM3, desired by the user for the user to use for various purposes.

After forming the intermediate image IM1 and before forming the remaining image IM2, the printer 2 causes the detection unit 60 to detect the state of the mark portion MA0. When performing positional adjustment such as the Bi-d adjustment or the paper feed adjustment, the printer 2 causes the detection unit 60 to detect the position of the mark portion MA0 as the state of the mark portion MA0. When performing density adjustment of the print image IM3, the printer 2 causes the detection unit 60 to detect the density of the mark portion MA0 as the state of the mark portion MA0. The detected state of the mark portion MA0 is used for adjustment processing such as the above-described positional adjustment and density adjustment.

As described above, it is not necessary to separately print a test pattern for adjustment of the printer 2. Therefore, the consumption amount of the liquid, the consumption amount of the medium, and the printing time for printing the test pattern are reduced.

The mark portion MAQ illustrated in FIG. 2 is an intersecting pattern formed by a pattern of the droplets 37 landed on the medium ME0 in which the main scanning line LN1 along the main scanning direction D1 and the sub-scanning line LN2 along the sub-scanning direction intersect each other. In FIG. 2, a cross pattern is illustrated as an example of the intersecting pattern in which the main scanning line LN1 and the sub-scanning line LN2 are orthogonal to each other. The intersecting pattern may be an L-shaped pattern in which the end of the main scanning line LN1 and the end of the sub-scanning line LN2 are coupled to each other, a T-shaped pattern in which the end of the sub-scanning line LN2 is coupled to a midway position of the main scanning line LN1, a pattern in which the end of the main scanning line LN1 is coupled to a midway position of the sub-scanning line LN2, or the like. The main scanning line LN1 and the sub-scanning line LN2 may intersect each other instead of being orthogonal to each other. Since the mark portion MA0 is the intersecting pattern, both the Bi-d adjustment and the paper feed adjustment can be performed.

In the intermediate image IM1, the dot 38 is not present at the landing position PO2 that is adjacent to the main scanning line LN1. Therefore, on the intermediate image IM1, the main scanning line LN1 has a higher density of the dots 38 of the liquid 36 than that of the landing position PO2 that is adjacent to the main scanning line LN1 in the sub-scanning direction D2. It is sufficient that the adjacent landing position PO2 is formed of at least one dot. In this way, the position of the main scanning line LN1 is accurately detected. In the intermediate image IM1, the dot 38 is not present at a landing position P03 that is adjacent to the sub-scanning line LN2. Therefore, on the intermediate image IM1, the sub-scanning line LN2 has a higher density of the dots 38 of the liquid 36 than that of the landing position P03 that is adjacent to the sub-scanning line LN2 in the main scanning direction D1. It is sufficient that the adjacent landing position PO3 is formed of at least one dot. In this way, the position of the sub-scanning line LN2 is accurately detected. The landing positions PO2 and PO3 are included in the landing positions PO1 that is adjacent to the mark portion MA0.

Next, with reference to FIG. 3, an example of bi-directional multi-pass printing will be described. In FIG. 3, the forward direction D11 of the main scanning SC1 is the right direction, and the return direction D12 of the main scanning SC1 is the left direction. The feed direction D3 that is a direction in which the medium ME0 moves during the sub-scanning is the downward direction, and the sub-scanning direction D2 that is a relative movement direction of the recording head 30 with respect to the medium ME0 is the upward direction. Each of band regions B1 to B4, each of which is a unit in which the recording of the print image IM3 is completed, corresponds to half the length of the nozzle row 33 in the sub-scanning direction D2. In the band regions B2 to B4, the recording of the print image IM3 is completed in two passes of the main scanning SC1.

At a timing t1, the control unit U1 controls the main scanning SC1 so as to move the recording head 30 in the forward direction D11 while causing the recording head 30 to eject the droplets 37 in alignment with the band regions B1 and B2. Here, with respect to the band region B2, the intermediate image IM1 is formed in the first pass. This first pass is referred to as the first pass PA1. The band regions B1 and B2 are image recording regions of the first pass PA1.

At a subsequent timing t2, the control unit U1 controls the sub-scanning SC2 so as to move the medium ME0 along the sub-scanning direction D12 until the recording head 30 is aligned with the band regions B2 and B3. Further, with respect to the band region B2, after the intermediate image IM1 is formed and before the remaining image IM2 is formed therein, the control unit U1 acquires the state of the mark portion MA0 from the detection unit 60.

At a subsequent timing t3, the control unit U1 controls the main scanning SC1 so as to move the recording head 30 in the return direction D12 while causing the recording head 30 to eject the droplets 37 in alignment with the band regions B2 and B3. Here, with respect to the band region B3, the intermediate image IM1 is formed in the first pass, and with respect to the band region B2, the print image IM3 is formed in the second pass. This second pass is referred to as the second pass PA2. The band regions B2 and B3 are image recording regions of the second pass PA2.

At a subsequent timing t4, the control unit U1 controls the sub-scanning SC2 so as to move the medium ME0 along the sub-scanning direction D2 until the recording head 30 is aligned with the band regions B3 and B4. Further, with respect to the band region B3, after the intermediate image IM1 is formed and before the remaining image IM2 is formed therein, the control unit U1 acquires the state of the mark portion MA0 from the detection unit 60.

At a subsequent timing t5, the control unit U1 controls the main scanning SC1 so as to move the recording head 30 in the forward direction D11 while causing the recording head 30 to eject the droplets 37 in alignment with the band regions B3 and B4. Here, with respect to the band region B4, the intermediate image IM1 is formed in the first pass, and with respect to the band region B3, the print image IM3 is formed in the second pass.

As described above, the control unit U1 controls the bi-directional multi-pass printing in which the print image IM3 is formed on the medium ME0 while repeating the main-scanning SC1 and the sub-scanning SC2.

As described above, at the timings t1 to t3, the band region B2 becomes the overlapping region OL1 (see FIGS. 4 to 6) in which the image recording regions overlap each other in the first pass PA1 and the second pass PA2. At the timings t3 to t5, the band region B3 becomes the overlapping region OL1 in which the image recording regions overlap each other between passes. In the example illustrated in FIG. 3, the control unit U1 performs control to form the mark portion MA0 in the overlapping region OL1 in one pass. By forming the mark portion MA0 in one pass, errors that occur in the mark portion MA0 are reduced compared to a case where the mark portion MA0 is formed in two or more passes.

First, with reference to FIG. 4, an example will be described in which the input image IM0 in which the dots 38 are formed at the recording rate of 100% is divided into respective passes to form the print image IM3. In the schematic example illustrated in FIG. 4, the input image IM0 corresponds to the overlapping region OL1, and the printer 2 forms the print image IM3 in the overlapping region OL1 in two passes including the first pass PA1 and the second pass PA2. The second pass PA2 is a pass subsequent to the first pass PA1, and in the example illustrated in FIG. 3, the direction of the main scanning SC1 of the second pass PA2 is different from that of the first pass PA1.

First, the control unit U1 divides the input image IM0 into the intermediate image IM1 and the remaining image IM2. Here, the control unit U1 generates the intermediate image IM1 so as to cause the mark portion MA0 to be included in the intermediate image IM1, based on the input image IM0. The dot 38 of the mark portion MA0 is derived from the input image IM0. FIG. 4 illustrates the main scanning line LN1 in which a plurality of the dots 38 are continuous in the main scanning direction D1, and the sub-scanning line LN2 in which a plurality of the dots 38 are continuous in the sub-scanning direction D2. Therefore, the mark portion MA0 illustrated in FIG. 4 can be said to be the cross pattern as one of the intersecting patterns. Further, the control unit U1 does not arrange the dot 38 at the landing position P01 that is adjacent to the mark portion MA0, on the intermediate image IM1. In this way, the accuracy of the detection of the state of the mark portion MA0 by the detection unit 60 is improved. Along with the generation of the intermediate image IM1, the control unit U1 generates the remaining image IM2 by removing the dots 38 arranged in the intermediate image IM1 from the dots 38 arranged in the input image IM0.

After the division of the input image IM0, the control unit U1 performs control to form the intermediate image IM1 on the medium ME0 in the first pass PA1, and performs control to form the remaining image IM2 on the medium ME0 in the second pass PA2. In this way, the peripheral region including the landing position PO1 that is adjacent to the mark portion MA0 is filled with the remaining image IM2, and the print image IM3 is completed on the medium ME0. It can also be said that the trace of the mark portion MA0 does not remain in the print image IM3. Note that by acquiring the state of the mark portion MA0 from the detection unit 60 before the formation of the remaining image IM2, the control unit U1 can execute the processing based on the state of the mark portion MA0.

The recording rate of the dots 38 of the print image IM3 may be less than 100%. FIG. 5 illustrates, as an example, a state in which the input image IM0 in which the dots 38 are formed at the recording rate of 50% is divided into respective passes to form the print image IM3. In this case also, the control unit U1 divides the input image IM0 into the intermediate image IM1 and the remaining image IM2. As a result, the arrangement of the dots 38 in the mark portion MA0 becomes discrete. FIG. 5 illustrates the main scanning line LN1 in which a plurality of the dots 38 are discretely arranged in the main scanning direction D1, and the sub-scanning line LN2 in which a plurality of the dots 38 are discretely arranged in the sub-scanning direction D2. In this case also, the control unit U1 does not arrange the dot 38 at the landing position PO1 that is adjacent to the mark portion MA0, on the intermediate image IM1. Therefore, the mark portion MA0 has a higher density of the dots 38 than that of the landing position PO1 that is adjacent to the mark portion MA0, on the intermediate image IM1, and can be detected by the detection unit 60. Of course, along with the generation of the intermediate image IM1, the control unit U1 generates the remaining image IM0 by removing the dots 38 arranged in the intermediate image IM1 from the dots 38 arranged in the input image IM0.

After the division of the input image IM0, the control unit U1 performs control to form the intermediate image IM1 on the medium ME0 in the first pass PA1, and performs control to form the remaining image IM2 on the medium ME0 in the second pass PA2. In this way, the peripheral region including the landing position PO1 that is adjacent to the mark portion MA0 is filled with the remaining image IM2, and the print image IM3 is completed on the medium ME0.

When the movement direction of the recording head 30 in the second pass PA2 is opposite to that in the first pass PA1, as illustrated in FIG. 6, in the overlapping region OL1, the peripheral region of the mark portion MA0 is filled with the dots 38 formed by the recording head 30 moving in the movement direction opposite to the movement direction applied to the mark portion MA0. In the schematic example illustrated in FIG. 6, the recording head 30 includes the nozzles 34 of #0 to #9 as the nozzle row 33, and the sub-scanning direction D2 is the upward direction. Of course, the nozzle row 33 may include eleven or more of the nozzles 34. Although the recording head 30 illustrated in FIGS. 1 and 3 does not move in the sub-scanning direction D2, relative positions of the recording head 30 with respect to the medium ME0 moving in the feed direction D3 in the first pass PA1 and the second pass PA2 are illustrated in FIG. 6. Assuming that the sub-scanning direction D2 is the relative movement direction of the recording head 30 with respect to the medium ME0, the upstream side with respect to the sub-scanning direction D2 is the lower side in the drawing, and the downstream side with respect to the sub-scanning direction D2 is the upper side in the drawing. In the first pass PA1, the main scanning SC1 in which the recording head 30 moves in the forward direction D11 is performed, and the dots 38 can be formed at positions indicated by the circled numbers 1. In the second pass PA2, the main scanning SC1 in which the recording head 30 moves in the return direction D12 is performed, and the dots 38 can be formed at positions indicated by the circled numbers 2.

In the overlapping region OL1 illustrated in FIG. 6, raster lines RL1 to RL5 along the main scanning direction D1 are illustrated. In the lower part of FIG. 6, a combination of the nozzles 34 used for each of the raster lines is illustrated.

The combination of the nozzles 34 that eject the droplet 37 on the raster line RL1 is the nozzle #5 used in the first pass PA1 and the nozzle #0 used in the second pass PA2. The nozzle #5 is used to form the intermediate image IM1 including the mark portion MA0, and the nozzle #0 is used to form the remaining image IM2. Therefore, with respect to the raster line RL1, the nozzle #5 arranged on the most downstream side in the sub-scanning direction D2 among the nozzles #5 and #0 is used as the downstream nozzle NZ1 to form the mark portion MA0.

The combination of the nozzles 34 that eject the droplet 37 onto the raster line RL2 is the nozzle #6 used in the first pass PA1 and the nozzle #1 used in the second pass PA2. Therefore, the downstream nozzle NZ1 for the raster line RL2 is the nozzle #6.

The combination of the nozzles 34 that eject the droplet 37 onto the raster line RL3 is the nozzle #7 used in the first pass PA1 and the nozzle #2 used in the second pass PA2. Therefore, the downstream nozzle NZ1 for the raster line RL3 is the nozzle #7.

The combination of the nozzles 34 that eject the droplet 37 onto the raster line RL4 is the nozzle #8 used in the first pass PA1 and the nozzle #3 used in the second pass PA2. Therefore, the downstream nozzle NZ1 for the raster line RL4 is the nozzle #8.

The combination of the nozzles 34 that eject the droplet 37 onto the raster line RL5 is the nozzle #9 used in the first pass PA1 and the nozzle #4 used in the second pass PA2. Therefore, the downstream nozzle NZ1 for the raster line RL5 is the nozzle #9.

As described above, the control unit U1 performs control to form the mark portion MA0 in the overlapping region OL1 by ejecting the liquid 36 from the downstream nozzle NZ1 among the combination of the plurality of nozzles 34 that eject the liquid 36 onto each of the raster lines in the overlapping region OL1. Since the mark portion MA0 is formed by the liquid 36 ejected from the downstream nozzle NZ1 to the overlapping region OL1, the state of the mark portion MA0, which is not affected by the liquid 36 ejected from the other nozzle to the overlapping region OL1, is detected by the detection unit 60. Therefore, the mark portion MA0 is accurately detected.

Further, in at least a portion of the remaining image IM2 that is on the same raster lines RL2 to RL4 as the mark portion MA0, the dot 38 is formed by the droplet 37 landing on the medium ME0 in the second pass PA2 whose movement direction of the recording head 30 is opposite to that of the first pass PA1. Therefore, the control unit U1 performs control to form, on the medium ME0, at least the portion of the remaining image IM2 that is on the same raster lines RL2 to RL4 as the mark portion MA0 in the second pass PA2. In this way, the characteristics of the same raster lines RL2 to RL4 as the mark portion MA0 are less likely to appear, and it is possible to suppress the trace of the mark portion MA0 from remaining when the print image is completed.

### (3) Specific Example of Adjustment Processing:

FIG. 7 schematically illustrates the adjustment processing of the printer 2. The adjustment processing is performed by, for example, the controller 10 that serves as the control unit U1 illustrated in FIG. 1. Here, steps S102 to S104 correspond to the intermediate image formation step ST1, step S106 corresponds to the detection step ST2, step S108 corresponds to the remaining image formation step ST3, and step S110 corresponds to the processing step ST4. Hereinafter, description of "step" may be omitted and a reference sign for the step may be indicated in parentheses. Print control processing at S102 to S108 is started when the controller 10 receives a print instruction to form the print image IM3 that is not a test pattern for adjustment. The print instruction may be an instruction caused by a print request from the host device HO1 to the printer 2, an instruction caused by a print start operation on the input unit 26 of the printer 2, or the like. The adjustment at S110 may be performed as a result of being triggered by the execution of the print control processing at S102 to S108, may be performed once every predetermined time period, such as every month, independently of the print control processing, or may be performed when the controller 10 receives an adjustment instruction. The adjustment instruction may be an instruction caused by an adjustment request from the host device HO1 to the printer 2, an instruction caused by an adjustment start operation on the input unit 26 of the printer 2, or the like.

Hereinafter, the adjustment processing will be described with reference to FIGS. 1 to 6.

When the adjustment processing is started, the controller 10 divides the input image IM0 into the intermediate image IM1 and the remaining image IM2 (S102). First, the controller 10 generates the intermediate image IM1 so as to cause the mark portion MA0 detectable by the detection unit 60 to be included in the intermediate image IM1, based on the input image IM0. The controller 10 may generate the intermediate image IM1 so that the dot 38 is not arranged at the landing position P01 that is adjacent to the mark portion MA0, on the intermediate image IM1. In this way, when the mark portion MA0 is formed in the first pass PA1, the liquid 36 is not ejected from the recording head 30 onto the landing position PO1 that is adjacent to the mark portion MA0. Note that as long as the state of the mark portion MA0 is detectable by the detection unit 60, the dot 38 may be arranged at the landing position PO1 that is adjacent to the mark portion MA0. Subsequently, the controller 10 generates the remaining image IM2 by removing the dots 38 arranged in the intermediate image IM1 from the dots 38 arranged in the input image IM0.

After the division of the input image IM0, the controller 10 controls the recording head 30 and the drive unit 50 so that the intermediate image IM1 including the mark portion MA0 is formed in the overlapping region OL1 by a given pass among the plurality of passes, for example, in the first pass PA1 (S104). For example, the controller 10 moves the recording head 30 in the forward direction D1 while causing the recording head 30 to eject the droplet 37 in alignment with the band region B1 and the band region B2 that is the overlapping region OL1, as described at the timing t1 illustrated in FIG. 3. When the droplet 37 ejected from the recording head 30 during the main scanning SC1 lands on the medium ME0, the controller 10 controls the sub-scanning SC2 so that the droplet 37 is ejected from the recording head 30 to the overlapping region OL1 in a subsequent pass, for example, in the second pass PA2. For example, the controller 10 controls the sub-scanning SC2 so as to move the medium ME0 along the sub-scanning direction D2 until the recording head 30 is aligned with the band regions B2 and B3, as described at the timing t2 illustrated in FIG. 3.

As described above, the control unit U1 performs control to form the intermediate image IM1 including the mark portion MA0 on the medium ME0 based on the input image IM0 in the given pass.

After the formation of the mark portion MA0, the detection unit 60 detects the state of the mark portion MA0 by, for example, capturing an image of the mark portion MA0 and the vicinity thereof. Thus, the control unit U1 acquires the state of the mark portion MA0 from the detection unit 60. For example, when the mark portion MA0 is the intersecting pattern as illustrated in FIG. 2, the controller 10 acquires, from the detection unit 60, the position of the main scanning line LN1 in the sub-scanning direction D2 and the position of the sub-scanning line LN2 in the main scanning direction D1 (S106). When the detection unit 60 outputs the captured image to the controller 10, the controller 10 may first extract the mark portion MA0 from the captured image acquired from the detection unit 60. Then, based on the captured image, the controller 10 can identify the position of the main scanning line LN1 in the sub-scanning direction D2 and the position of the sub-scanning line LN2 in the main scanning direction D1.

Depending on the input image IM0, there is a possibility that the mark portion MA0 may not be detected from the overlapping region OL1. In this case, the controller 10 may acquire the state of the mark portion MA0 from the detection unit 60 in a subsequent pass.

After the acquisition of the state of the mark portion MA0, the controller 10 controls the recording head 30 and the drive unit 50 so as to form the remaining image IM2 in the overlapping region OL1 in a subsequent pass, for example, in the second pass PA2 (S108). For example, as described at the timing t3 illustrated in FIG. 3, the controller 10 moves the recording head 30 in the return direction D12 while causing the recording head 30 to eject the droplet 37 in alignment with the band region B2 that is the overlapping region OL1 and the band region B3. In this way, the peripheral region including the landing position P01 that is adjacent to the mark portion MA0 is filled with the remaining image IM2, and the recording of the print image IM3 is completed in the overlapping region OL1.

The controller 10 repeatedly controls the recording of the print image IM3 onto the overlapping region OL1, while repeating the main scanning SC1 and the sub-scanning SC2.

After that, at the timing of adjustment, the controller 10 performs adjustment based on the state of the mark portion MA0 (S110), and ends the adjustment processing. As illustrated in FIG. 8, the adjustment based on the state of the mark portion MA0 includes Bi-d adjustment, PF adjustment (paper feed adjustment), density adjustment, and the like.

FIG. 8 schematically illustrates the adjustment based on the state of the mark portion MA0.

The Bi-d adjustment means setting of an adjustment value V1 for causing the landing position of the droplet 37 in the forward path and the landing position of the droplet 37 in the return path to be matched with each other in the main scanning direction D1. Here, the forward path means the main scanning SC1 in which the recording head 30 moves in the forward direction D11, and the return path means the main scanning SC1 in which the recording head 30 moves in the return direction D12. For example, as illustrated in FIG. 8, it is assumed that the landing position of the return path, which should normally match the landing position of the forward path in the main scanning direction D1, is shifted in the forward direction D11 from the landing position of the forward path. In this case, the position of the sub-scanning line LN2 formed on the medium ME0 in the return path is shifted in the forward direction D11 from the position of the sub-scanning line LN2 formed on the medium ME0 in the forward path. The controller 10 can execute the Bi-d adjustment by causing the storage unit 23 of the printer 2 to store the adjustment value V1 corresponding to the position shift of the sub-scanning line LN2. For example, the controller 10 can cause the landing positions of the droplets 37 in the main scanning direction D1 in the forward path and the return path to be matched with each other by delaying the ejection timing of the droplet 37 from the recording head 30 in the return path in accordance with the adjustment value V1. Of course, even when the landing position of the return path, which should normally match the landing position of the forward path in the main scanning direction D1, is shifted in the return direction D12 from the landing position of the forward path, it is possible to cause the landing positions of the droplets 37 in the main scanning direction D1 in the forward path and the return path to be matched with each other by the setting of the adjustment value V1.

The mark portion MA0 that is preferable for the Bi-d adjustment may include the sub-scanning line LN2, but need not necessarily include the main scanning line LN1. However, even if the sub-scanning line LN2 is not included in the mark portion MA0, since the position of the mark portion MA0 in the main scanning direction D1 can be detected, the Bi-d adjustment can be executed.

The PF adjustment means setting of an adjustment value V2 for adjusting the transport amount of the medium ME0 in the sub-scanning direction D2 during the sub-scanning SC2, in a neither excessive nor insufficient manner. When the transport amount of the medium ME0 during the sub-scanning SC2 is too large, a streak caused by a space generated between band regions, for example, a light-colored streak is generated, and when the transport amount of the media SC2 during the sub-scanning SC2 is too small, a streak caused by the dots 38 overlapping between band regions, for example, a dark-colored streak is generated. Thus, the controller 10 causes the storage unit 23 to store the adjustment value V2, and performs the PF adjustment in accordance with the adjustment value V2. For example, as illustrated in FIG. 8, it is assumed that the interval between the landing positions of the droplets 37 in the sub-scanning direction D2, between two passes of the sub-scanning SC2, is wider than a designed band region width WB. In this case, the interval between the main scanning line LN1 formed on the medium ME0 in a given pass and the main scanning line LN1 formed on the medium ME0 in the preceding pass is wider than the band region width WB. The controller 10 can execute the PF adjustment by causing the storage unit 23 of the printer 2 to store the adjustment value V2, which corresponds to the deviation of the interval between the main scanning lines LN1 from the band region width WB. For example, the controller 10 can adjust the transport amount of the medium ME0 in the sub-scanning direction D2 during the sub-scanning SC2, in a manner that is neither excessive nor insufficient by reducing the transport amount of the medium ME0 during the sub-scanning ME0 in accordance with the adjustment value V2. Of course, even when the interval between the landing positions of the droplets 37 in the sub-scanning direction D2 between two passes of the sub-scanning SC2 is narrower than the designed band region width WB, the transport amount of the medium ME0 during the sub-scanning SC2 can be adjusted in a neither excessive nor insufficient manner by the setting of the adjustment value V2.

The mark portion MA0 that is preferable for the PF adjustment may include the main scanning line LN1, but need not necessarily include the sub-scanning line LN2. However, even if the main scanning line LN1 is not included in the mark portion MA0, since the position of the mark portion MA0 in the sub-scanning direction D2 can be detected, the PF adjustment can be executed.

The density adjustment means setting of an adjustment value V3 for aligning the density of the print image IM3 with the density of the input image IM0. The mark portion MA0 for the density adjustment is preferably a two-dimensional image such as a rectangle illustrated in FIG. 8, so that the density is accurately detected. For example, as illustrated in FIG. 8, it is assumed that the print image IM3 is darker than the input image IM0. In this case, the output density of the mark portion MA0 is higher than the density of mark portion data DAm for forming the mark portion MA0. The controller 10 can execute the density adjustment by causing the storage unit 23 of the printer to store the adjustment value V3, which corresponds to the deviation of the output density of the mark portion MA0 from the density of the mark portion data DAm. For example, the controller 10 can match the density of the print image IM3 with the density of the input image IM0 by reducing the output density of the mark portion MA0 corresponding to the mark portion data DAm to the density of the mark portion data DAm in accordance with the adjustment value V3. Of course, even when the print image IM3 is lighter than the input image IM0, the density of the print image IM3 can be matched with the density of the input image IM0 by the setting of the adjustment value V3.

As described above, the state of the mark portion MA0 included in the intermediate image IM1 formed in a given pass is detected, and the print image IM3 is formed in which the trace of the mark portion MA0 is erased by the remaining image IM2 formed in a subsequent pass. While the print image IM3 that is not the test pattern is formed, the processing based on the state of the mark portion MA0, for example, the Bi-d adjustment, the paper feed adjustment, the density adjustment, or the like is performed. In this way, it is not necessary to separately print the test pattern for adjustment of the printer 2. Therefore, in this specific example, it is possible to reduce the consumption amount of the liquid, the consumption amount of the medium, and the printing time for printing the test pattern.

### (4) Modifications:

Various modifications of the present disclosure can be considered.

For example, the combination of the colors of the liquid 36 is not limited to C, M, Y and K, and may include, in addition to C, M, Y and K, orange, green, light cyan with a lower density than C, light magenta with a lower density than M, dark yellow with a higher density than Y, light black with a lower density than K, a colorless color for image quality improvement, and the like. Further, in the combination of the colors C, M, Y, and K of the liquids 36, some of the colors may not be provided.

The entity that performs the above-described processing is not limited to the CPU, and may be an electronic component other than the CPU such as an ASIC. Of course, a plurality of CPUs may cooperate to perform the above-described processing, or a CPU and another electronic component (e.g., an ASIC) may cooperate to perform the above-described processing.

Part of the above-described processing may be performed by the host device HO1. In this case, the combination of the controller 10 and the host device HO1 is an example of the control unit U1, and the combination of the printer 2 and the host device H01 is an example of the printing apparatus 1.

The movement direction of the recording head 30 in the second pass PA2 may be the same as the movement direction of the recording head 30 in the first pass PA1. In this case, the movement direction of the recording head 30 in both the passes (PA1, PA2) may be the forward direction D11 or the return direction D12.

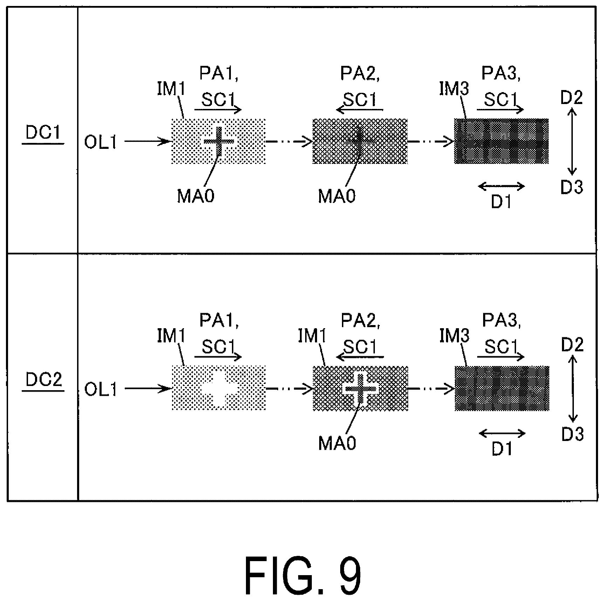

As illustrated in FIG. 9, the recording of the print image IM3 on the overlapping region OL1 may be performed in three or more passes. Pass division examples DC1 and DC2 illustrated in FIG. 9 illustrate examples in which the input image IM0 as illustrated in FIGS. 4 and 5 is divided into the first pass PA1, the second pass PA2 following the first pass PA1, and a third pass PA3 following the second pass PA2. The controller 10 may perform the main scanning SC1 in the forward direction D11 in the first pass PA1, perform the main scanning SC1 in the return direction D12 in the second pass PA2, and perform the main scanning SC1 in the forward direction D11 in the third pass PA3.

The pass division example DC1 illustrates an example in which the intermediate image IM1 including the mark portion MA0 is formed in the first pass PA1 as a given pass, and the remaining image IM2 is formed in subsequent passes (PA2, PA3). The controller 10 performs control to form the intermediate image IM1 on the medium ME0 based on the input image IM0 in the first pass PA1 and to form the remaining images IM2 on the medium ME0 in the second pass PA2 and the third pass PA3. Therefore, it can be said that the controller 10 forms the mark portion MA0 in the overlapping region OL1 in the first pass, and it can be said that the controller 10 forms the mark portion MA0 in the overlapping region OL1 in one pass. The controller 10 may acquire the state of the mark portion MA0 detected by the detection unit 60 after the mark portion MA0 is formed in the first pass PA1 and before the second pass PA2 is performed. FIG. 9 illustrates that the trace of the mark portion MA0 remains after the second pass PA2 until the third pass PA3 is performed. Therefore, the controller 10 can also acquire the state of the mark portion MA0 detected by the detection unit 60 after the second pass PA2 and before the third pass PA3 is performed.

Of course, even when the number of passes is four or more, the print image IM3 can be formed in the same manner.

The pass division example DC2 illustrates an example in which the intermediate image IM1 is formed in given passes (PA1, PA2), the mark portion MA0 is formed in the second pass PA2 among the given passes, and the remaining image IM2 is formed in the third pass PA3 subsequent to the given passes. The controller 10 performs control to form the intermediate image IM1 on the medium ME0 based on the input image IM0 in the given passes (PA1, PA2) and to form the mark portion MA0 of the intermediate image IM1 on the medium ME0 in the second pass PA2. Therefore, it can be said that the controller 10 forms the mark portion MA0 in the overlapping region OL1 in one pass. After the formation of the intermediate image IM1, the controller 10 performs control to form the remaining image IM2 on the medium ME0 in the third pass PA3. The controller 10 may acquire the state of the mark portion MA0 detected by the detection unit 60, after the mark portion MA0 is formed in the second pass PA2 and before the third pass PA3 is performed.

Of course, even when the number of passes is four or more, the print image IM3 can be formed in the same manner.

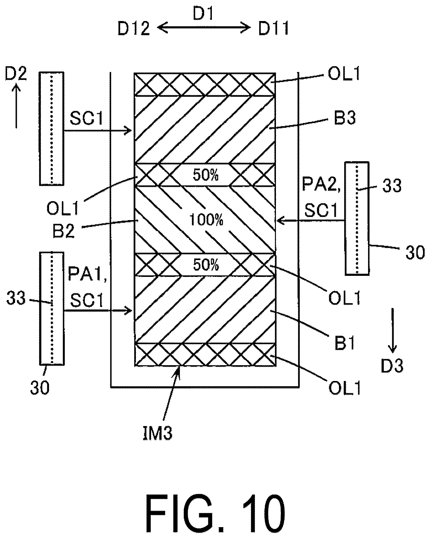

As illustrated in FIG. 10, even when the recording of the print image IM3 is performed on the band regions B1 to B3, which are not the overlapping region OL1, in one pass, adjustment such as the PF adjustment is possible by forming the mark portion MA0 in the overlapping region OL1. FIG. 10 schematically illustrates partial overlap printing in which recording regions of the print image IM3 for each pass are partially overlapped with each other in so-called band printing.

In the first pass PA1 illustrated in FIG. 10, the controller 10 controls the main scanning SC1 so as to move the recording head 30 in the forward direction D11 while ejecting the droplet 37 from the recording head 30 in alignment with the band region B1 and the overlapping regions OL1 on both sides of the band region B1. Here, the usage rate of the nozzles 34 in the band region B1 is 100%, and the usage rate of the nozzles 34 in the overlapping region OL1 is 50%. In the subsequent second pass PA2, the controller 10 controls the main scanning SC1 so as to move the recording head 30 in the return direction D12 while ejecting the droplet 37 from the recording head 30 onto the band region B2 and the overlapping regions OL1 on both sides of the band region B2. Here, the usage rate of the nozzles 34 in the band region B2 is 100%, and the usage rate of the nozzles 34 in the overlapping region OL1 is 50%. In a pass subsequent to the second pass PA2, the controller 10 controls the main scanning SC1 so as to move the recording head 30 in the forward direction D11 while ejecting the droplet 37 from the recording head 30 onto the band region B3 and the overlapping regions OL1 on both sides of the band region B3. Here, the usage rate of the nozzles 34 in the band region B3 is 100%, and the usage rate of the nozzles 34 in the overlapping region OL1 is 50%. In this way, the control unit U1 controls the partial overlap printing while repeating the main scanning SC1 and the sub-scanning SC2.

FIG. 11 schematically illustrates an arrangement of dots until the print image IM3 is formed in the overlapping region OL1 illustrated in FIG. 10.

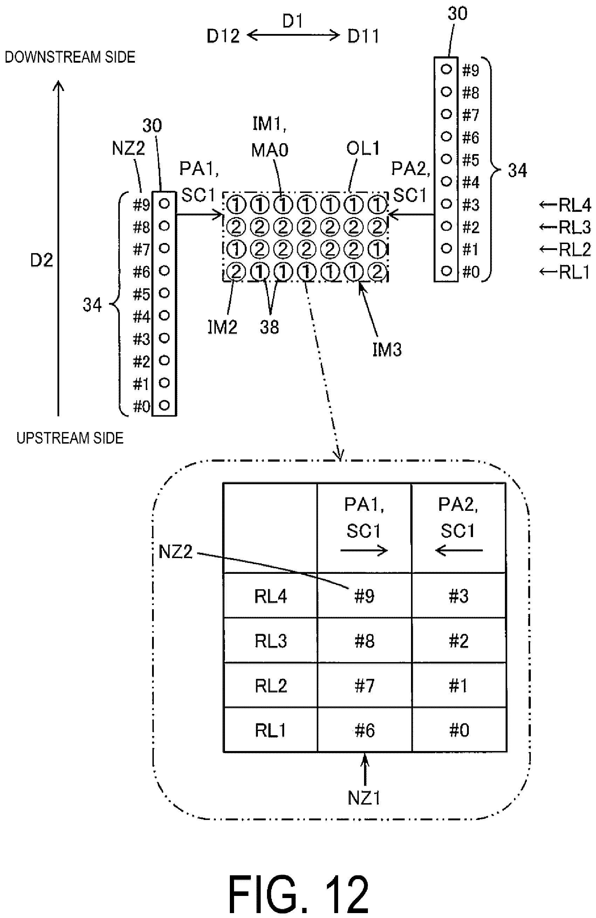

The controller 10 first divides the input image IM0 into the intermediate image IM1 and the remaining image IM2. The mark portion MA0 illustrated in FIG. 11 is the main scanning line LN1 along the main scanning direction D1, and is arranged on the most downstream side in the sub-scanning direction D2 in the overlapping region OL1. The controller 10 does not arrange the dot 38 at the landing position P02 that is adjacent to the main scanning line LN1 in the sub-scanning direction D2, on the intermediate image IM1. In this way, the detection unit 60 can accurately detect the state of the mark portion MA0. After the division of the input image IM0, the controller 10 performs control to form the intermediate image IM1 on the medium ME0 in the first pass PA1, and performs control to form the remaining image IM2 on the medium ME0 in the second pass PA2. In this way, the peripheral region including the landing position PO1 adjacent to the mark portion MA0 is filled with the remaining image IM2, and the print image IM3 is completed on the medium ME0. When the movement direction of the recording head 30 in the second pass PA2 is opposite to that in the first pass PA1, as illustrated in FIG. 12, in the overlapping region OL1, the peripheral region of the mark portion MA0 is filled with the dots 38 formed by the recording head 30 moving in the movement direction opposite to the movement direction applied to the mark portion MA0.

In the overlapping region OL1 illustrated in FIG. 12, the raster lines RL1 to RL4 along the main scanning direction D1 are illustrated. The lower part of FIG. 12 illustrates a combination of the nozzles 34 used for each of the raster lines.

The combination of the nozzles 34 that eject the droplet 37 onto the raster line RL1 is the nozzle #6 used in the first pass PA1 and the nozzle #0 used in the second pass PA2. The nozzle #6 is used to form the intermediate image IM1 including the mark portion MA0, and the nozzle #0 is used to form the remaining image IM2. Therefore, with respect to the raster line RL1, the nozzle #6 arranged on the most downstream side in the sub-scanning direction D2 among the nozzles #6 and #0 is used as the downstream nozzle NZ1 to form the mark portion MA0. Similarly, the downstream nozzles NZ1 for the raster lines RL2, RL3, and RL4 are the nozzles #7, #8, and #9, respectively.

In the example illustrated in FIG. 12, the plurality of nozzles 34 that eject the droplet 37 onto the overlapping region OL1 are the nozzles #0 to #3 and #6 to #9. Among these nozzles, the nozzle #9 on the most downstream side in the sub-scanning direction D2 is set as a most downstream nozzle NZ2. The mark portion MA0 is formed on the most downstream side of the overlapping region OL1 in the sub-scanning direction D2 by the droplet 37 ejected from the nozzle #9, which is the most downstream nozzle NZ2, in the first pass PA1. That is, the control unit U1 performs control to form the mark portion MA0 in the overlapping region OL1 by ejecting the liquid 36 from the most downstream nozzle NZ2 among the plurality of nozzles 34 that eject the liquid 36 onto the overlapping region OL1.

Since the droplet 37 is first ejected from the most downstream nozzle NZ2 to the overlapping region OL1, the state of the mark portion MAO, which is not affected by the droplet 37 ejected from the nozzles 34 other than the most downstream nozzle NZ2 to the overlapping region OL1, is detected by the detection unit 60. Further, since the most downstream nozzle NZ2 is arranged on the most downstream side in the nozzle row 33, the dot 38 is not formed on the downstream side in the sub-scanning direction D2 before the formation of the mark portion MA0, and the state of the mark portion MA0, which is not affected by the dot 38, is thus detected by the detection unit 60. If the most downstream nozzle NZ2 is set as a nozzle for forming the mark portion, the mark portion MA0 is formed no matter what kind of recording is performed. Thus, processing and a memory area for determining the nozzle for forming the mark portion become unnecessary.

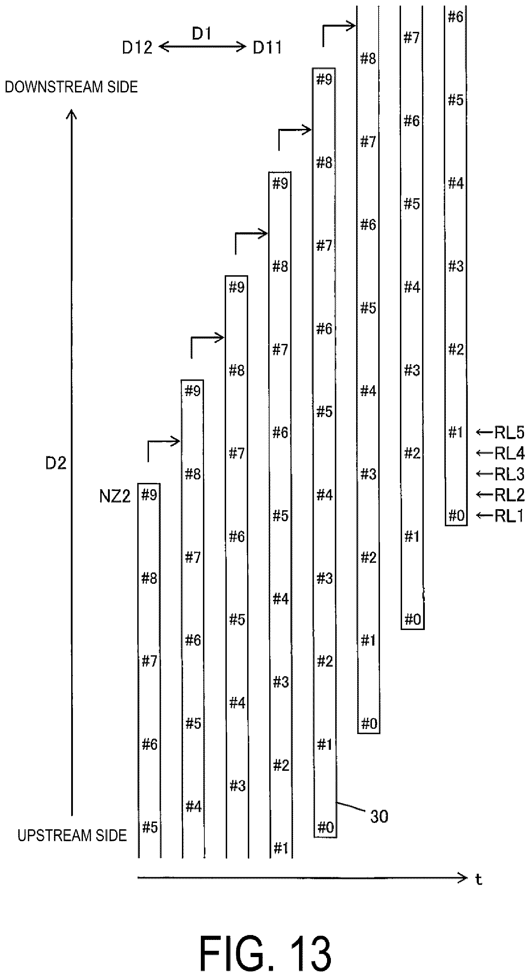

As illustrated in FIG. 13, even when the transport amount of the medium ME0 during the sub-scanning SC2 is not an integer multiple of the nozzle pitch, the downstream nozzle NZ1 including the most downstream nozzle NZ2 can be set as the nozzle for forming the mark portion. FIG. 13 schematically illustrates a combination of the nozzles 34 used for each raster line in the overlapping region OL1 when the medium transport amount during sub-scanning is 1.25 times the nozzle pitch. In the schematic example illustrated in FIG. 13, the recording head 30 includes the nozzles 34 of #0 to #9 as the nozzle row 33, and the sub-scanning direction D2 is the upward direction. FIG. 13 illustrates relative positions of the recording head 30 with respect to the medium ME0 moving in the feed direction D3 in each pass.

The nozzle pitch of the nozzle row of the recording head 30 illustrated in FIG. 13 is equivalent to four dots. When the recording head 30 relatively moves by 1.25 times the nozzle pitch in the sub-scanning direction D2 every time the sub-scanning SC2 is performed, the relative movement amount of the recording head 30 during one sub-scanning corresponds to five dots. When the first passes PA1 and the second passes PA2 are performed as illustrated in FIG. 13, the overlapping region OL1 including the raster lines RL1 to RL5 is generated. Here, on the raster line RL1, the nozzle #0 is used after the nozzle #5 is used, on the raster line RL2, the nozzle #4 is used after the nozzle #9 is used, on the raster line RL3, the nozzle #3 is used after the nozzle #8 is used, on the raster line RL4, the nozzle #2 is used after the nozzle #7 is used, and on the raster line RL5, the nozzle #1 is used after the nozzle #6 is used. Therefore, the downstream nozzles NZ1 for forming the mark portion MA0 are the nozzles #5 to #9, and the most downstream nozzle NZ2 is the nozzle #9.

In this case also, the mark portion MA0 is formed by the liquid 36 ejected from the downstream nozzle NZ1 to the overlapping region OL1, and the state of the mark portion MA0, which is not affected by the liquid 36 ejected from another nozzle to the overlapping region OL1, is thus detected by the detection unit 60. Since the droplet 37 is first ejected from the most downstream nozzle NZ2 to the overlapping region OL1, the state of the mark portion MAO, which is not affected by the droplet 37 ejected from the nozzles 34 other than the most downstream nozzle NZ2 to the overlapping region OL1, is detected by the detection unit 60. Further, since the most downstream nozzle NZ2 is arranged on the most downstream side in the nozzle row 33, the dot 38 is not formed on the downstream side in the sub-scanning direction D2 before the formation of the mark portion MA0, and the state of the mark portion MA0, which is not affected by the dot 38, is thus detected by the detection unit 60. Therefore, the state of the mark portion MA0 is accurately detected, and by setting the most downstream nozzle NZ2 as the nozzle for forming the mark portion, the processing and the memory area for determining the nozzle for forming the mark portion become unnecessary.

As illustrated in FIG. 14, even when the print image IM3 is formed in a plurality of multi-pass regions (MP1, MP2) in which the number of passes for completing the recording of the print image IM3 is different from each other, the processing based on the state of the mark portion MA0 can be executed. FIG. 14 schematically illustrates combinations of the nozzles 34 in a case where first multi-pass regions MP1 and second multi-pass regions MP2 are generated. In the schematic example illustrated in FIG. 14, the recording head 30 includes the nozzles 34 of n1 to n6 as the nozzle row 33, and the sub-scanning direction D2 is the upward direction. FIG. 14 illustrates relative positions of the recording head 30 with respect to the medium ME0 moving in the feed direction D3 in each pass.

The recording head 30 illustrated in FIG. 14 includes an upstream nozzle row including the nozzles 34 of n1 to n3 and a downstream nozzle row including the nozzles 34 of n4 to n6. The upstream nozzle row includes a plurality of upstream end nozzles indicated by n1, a plurality of normal nozzles indicated by n2, and a plurality of downstream end nozzles indicated by n3. The downstream nozzle row includes a plurality of upstream end nozzles indicated by n4, a plurality of normal nozzles indicated by n5, and a plurality of downstream end nozzles indicated by n6. In the example illustrated in FIG. 14, the numbers of normal nozzles indicated by n2 and n5 are 7, respectively, and the numbers of end nozzles indicated by n1, n3, n4, and n6 are 2, respectively. The relative movement amount of the recording head 30 during the sub-scanning is equivalent to nine nozzles. With respect to the band regions B1, B4, and B7 in which the normal nozzles indicated by n5 and n2 are combined, the usage rates of the normal nozzles indicated by n5 and n2 are 50%, respectively. With respect to the band regions B2 and B5 in which the nozzles indicated by n5, n3, and n1 are combined, the usage rate of the normal nozzles indicated by n5 is 50%, and the usage rates of the end nozzles indicated by n3 and n1 are 25%, respectively. With respect to the band regions B3 and B6 in which the nozzles indicated by n6, n4, and n2 are combined, the usage rate of the normal nozzles indicated by n2 is 50%, and the usage rates of the end nozzles indicated by n6 and n4 are 25%, respectively. FIG. 14 illustrates the first path PA1 and the second path PA2 in a case where the band region B4 corresponds to the overlapping region OL1.

As illustrated in FIG. 14, each of the band regions B1, B4, and B7 becomes the first multi-pass region MP1 in which the recording of the print image IM3 is completed by two passes. In this case, the predetermined number of passes is "2". Each of the band regions B2, B3, B5, and B6 becomes the second multi-pass region MP2 in which the recording of the print image IM3 is completed by three passes, which is more than two passes. The control unit U1 completes the recording of the print image IM3 so as to cause the first multi-pass region MP1 in which recording is performed by the predetermined number of passes equal to or greater than two, and the second multi-pass region MP2 in which recording is performed by the number of passes greater than the predetermined number of passes to be present in the sub-scanning direction D2. Then, the control unit U1 performs control to form the mark portion MA0 in the first multi-path region MP1.

FIG. 15 schematically illustrates a combination of the nozzles 34 used for each raster line of the first multi-pass region MP1. The overlapping region OL1 illustrated in FIG. 15 is, for example, the band region B4 that is one of the first multi-path regions MP1 illustrated in FIG. 14. In the overlapping region OL1 illustrated in FIG. 15, the raster lines RL1 to RL5 along the main scanning direction D1 are illustrated. In the lower part of FIG. 15, a combination of the nozzles 34 used for each raster line is illustrated.

The combination of the nozzles 34 that eject the droplet 37 onto each of the raster lines RL1 to RL5 is always the nozzle indicated by n5 used at the time of the first pass PA1 and the nozzle indicated by n2 used at the time of the second pass PA2. The nozzle indicated by n5 is used to form the intermediate image IM1 including the mark portion MA0, and the nozzle indicated by n2 is used to form the remaining image IM2. Therefore, among the nozzles indicated by n5 and n2, the nozzle indicated by n5 on the most downstream side in the sub-scanning direction D2 is used as the downstream nozzle NZ1 to form the mark portion MA0.

Since the mark portion MA0 is formed by a small number of passes, when the mark portion MA0 is formed in the second multi-pass region MP2 formed by a relatively large number of passes, the mark portion MA0 may become noticeable in the print image IM3 due to a relatively large difference in the recording characteristics between the mark portion MA0 and the periphery thereof. In the example illustrated in FIG. 15, since the mark portion MA0 is formed in the first multi-pass region MP1 in which the number of passes is relatively small, it is possible to make the mark portion MA0 less noticeable in the print image IM3.

### (5) Conclusion:

As described above, according to various aspects of the present disclosure, it is possible to provide a configuration or the like capable of reducing the consumption amount of a liquid, the consumption amount of a medium, and a printing time for printing a test pattern. Of course, the basic operations and effects described above can be achieved even with an aspect including only components according to the independent claims.

A configuration in which the configurations disclosed in the above-described examples are replaced with one another or the combinations are changed, a configuration in which a known technology and each of the configurations disclosed in the above-described examples are replaced with one another or the combinations are changed, or the like can be implemented. The present disclosure also includes these configurations.

## Claims

1. A printing apparatus that forms a print image corresponding to an input image on a medium, the printing apparatus comprising:
a recording head including a nozzle row configured to eject a liquid onto the medium;
a control unit configured to
control main scanning in which a relative positional relationship between the recording head and the medium is changed along a main scanning direction,
control sub-scanning in which a relative positional relationship between the medium and the recording head is changed along a sub-scanning direction intersecting the main scanning direction,
control ejection of the liquid from the recording head, and
complete recording of the print image through a plurality of passes of the main scanning; and
a detection unit configured to detect a state of the liquid landed on the medium,
wherein
the control unit
performs control to form an intermediate image on the medium, the intermediate image including a mark portion detectable by the detection unit, and the intermediate image being formed by a given pass among the plurality of passes, based on the input image, and
performs control to form, on the medium, a remaining image being the print image excluding the intermediate image, the remaining image being formed in a pass subsequent to the given pass,
the detection unit detects a state of the mark portion, and
the control unit is configured to execute processing based on the state of the mark portion detected by the detection unit.

2. The printing apparatus according to claim 1, wherein
the plurality of passes include a first pass and a second pass, and
the control unit
controls formation of the print image to cause an overlapping region to be generated between an image recording region in the first pass and an image recording region in the second pass, and
controls formation of the mark portion in the overlapping region in one of the passes.

3. The printing apparatus according to claim 1, wherein
the plurality of passes include a first pass and a second pass,
the control unit controls formation of the print image to cause an overlapping region to be generated between an image recording region in the first pass and an image recording region in the second pass, and
when the sub-scanning direction is a relative movement direction of the recording head with respect to the medium, the control unit performs control to form the mark portion in the overlapping region by ejecting the liquid from a downstream nozzle arranged on the most downstream side in the sub-scanning direction, among a combination of a plurality of nozzles that eject the liquid onto a raster line along the main scanning direction in the overlapping region.

4. The printing apparatus according to claim 1, wherein
the plurality of passes include a first pass and a second pass,
the control unit controls formation of the print image to cause an overlapping region to be generated between an image recording region in the first pass and an image recording region in the second pass, and
when the sub-scanning direction is a relative movement direction of the recording head with respect to the medium, the control unit performs control to form the mark portion in the overlapping region by ejecting the liquid from a nozzle arranged on the most downstream side in the sub-scanning direction, among a plurality of nozzles that eject the liquid onto the overlapping region.

5. The printing apparatus according to claim 1, wherein
the plurality of passes include a first pass, and a second pass in which a movement direction of the recording head is opposite to that in the first pass, and
the control unit
performs control to form the intermediate image on the medium in the first pass, and
performs control to form a portion of the remaining image on the medium in the second pass, the portion being at least on the same raster line as the mark portion, and the raster line extending along the main scanning direction.

6. The printing apparatus according to claim 1, wherein
the control unit
completes the recording to cause a first multi-pass region and a second multi-pass region to be present in the sub-scanning direction, the first multi-pass region being a region in which the recording is completed by a predetermined number of passes equal to or greater than two, and the second multi-pass region being a region in which the recording is completed by a number of passes greater than the predetermined number of passes, and
performs control to form the mark portion in the first multi-pass region.

7. The printing apparatus according to claim 1, wherein
when the mark portion is formed in the given pass, the control unit does not cause the recording head to eject the liquid onto a landing position adjacent to the mark portion on the medium.

8. The printing apparatus according to claim 1, wherein
the mark portion is an intersecting pattern formed by a pattern of the liquid landed on the medium in which a main scanning line along the main scanning direction and a sub-scanning line along the sub-scanning direction intersect each other,
on the intermediate image, the main scanning line has a higher density of dots of the liquid than that of a landing position that is adjacent to the main scanning line in the sub-scanning direction, and
on the intermediate image, the sub-scanning line has a higher density of dots of the liquid than that of a landing position that is adjacent to the sub-scanning line in the main scanning direction.

9. A method of controlling a printing apparatus that performs main scanning in which a relative positional relationship between a recording head and a medium is changed along a main scanning direction, the recording head including a nozzle row configured to eject a liquid onto the medium, and sub-scanning in which a relative positional relationship between the medium and the recording head is changed along a sub-scanning direction intersecting the main scanning direction, that ejects the liquid from the recording head, and that completes recording of a print image corresponding to an input image through a plurality of passes of the main scanning, the method comprising:
an intermediate image formation step of forming an intermediate image on the medium, the intermediate image including a mark portion detectable by a detection unit configured to detect a state of the liquid landed on the medium, and the intermediate image being formed by a given pass among the plurality passes, based on the input image;
a detection step of detecting a state of the mark portion by the detection unit;
a remaining image formation step of forming, on the medium, a remaining image being the print image excluding the intermediate image, the remaining image being formed in a pass subsequent to the given pass; and
a processing step of performing processing based on the state of the mark portion detected by the detection unit.
